(19) **Europäisches Patentamt**
**European Patent Office**
**Office européen des brevets**

(11) **EP 4 314 756 B1**

(12) **EUROPÄISCHE PATENTSCHRIFT**

(45) Veröffentlichungstag und Bekanntmachung des Hinweises auf die Patenterteilung:
**07.05.2025  Patentblatt 2025/19**

(21) Anmeldenummer: **22717059.4**

(22) Anmeldetag: **03.03.2022**

(51) Internationale Patentklassifikation (IPC):
*G01M 13/023* (2019.01)    *B65G 43/02* (2006.01)
*B65G 43/04* (2006.01)

(52) Gemeinsame Patentklassifikation (CPC):
**G01M 13/023**; B65G 43/02

(86) Internationale Anmeldenummer:
**PCT/DE2022/200035**

(87) Internationale Veröffentlichungsnummer:
**WO 2022/199760 (29.09.2022 Gazette 2022/39)**

(54) **VORRICHTUNG UND VERFAHREN ZUR ERMITTLUNG EINER LÄNGSDEHNUNG UND EINER MITTLEREN GESCHWINDIGKEIT EINES RIEMENS, SOWIE ZUR ERMITTLUNG EINER GESCHWINDIGKEIT MINDESTENS EINER RIEMENSCHEIBE**

DEVICE AND METHOD FOR ASCERTAINING A LONGITUDINAL EXTENSION AND THE AVERAGE SPEED OF A BELT AND FOR ASCERTAINING THE SPEED OF AT LEAST ONE BELT PULLEY

DISPOSITIF ET PROCÉDÉ DE DÉTERMINATION D'UNE EXTENSION LONGITUDINALE ET DE LA VITESSE MOYENNE D'UNE COURROIE, ET DE DÉTERMINATION DE LA VITESSE D'AU MOINS UNE POULIE À COURROIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **23.03.2021  DE 102021202803**

(43) Veröffentlichungstag der Anmeldung:
**07.02.2024  Patentblatt 2024/06**

(73) Patentinhaber: **ContiTech Deutschland GmbH 30175 Hannover (DE)**

(72) Erfinder:
• **SCHWEFE, Thorsten**
  **30165 Hannover (DE)**
• **FREIHEIT, Philipp**
  **30165 Hannover (DE)**
• **LORENZ, Eduard**
  **30165 Hannover (DE)**

(74) Vertreter: **Continental Corporation c/o Continental AG Intellectual Property Postfach 169 30001 Hannover (DE)**

(56) Entgegenhaltungen:
EP-A2- 0 382 115    WO-A2-02/079747
DE-A1- 3 005 780    DE-U1- 202016 008 121
US-A- 5 291 131    US-B1- 9 228 909

EP 4 314 756 B1

**Beschreibung**

Die Erfindung betrifft eine Vorrichtung zur Ermittlung einer Längsdehnung und einer mittleren Geschwindigkeit eines Riemens, sowie zur Ermittlung einer Geschwindigkeit mindestens einer Riemenscheibe gemäß dem Oberbegriff des Anspruchs 1 und ein Vorsatzgerät gemäß Anspruch 9.

Weiterhin betrifft die Erfindung ein Verfahren gemäß dem Oberbegriff des Anspruchs 10, sowie die Verwendung des erfindungsgemäßen Verfahrens gemäß Anspruch 13.

Stand der Technik

Verfahren und Vorrichtungen, die einen Riemen und eine Antriebsvorrichtung für den Riemen aufweisen, sind grundsätzlich aus dem Stand der Technik bekannt. Dabei weist die Antriebsvorrichtung mehrere, beispielsweise zwei Riemenscheiben auf. Der Riemen ist in einer Umfangsrichtung ringförmig umlaufend ausgebildet und umschlingt die Riemenscheiben zumindest teilweise. Außerdem ist der Riemen von der Antriebsvorrichtung in Umfangsrichtung antreibbar. Bei einem Riemen handelt es sich vorzugsweise um einen Antriebsriemen zur Übertragung von Zugkräften. Dabei ist ein Riemen oftmals einer Vorspannung, Nutzkräften, Fliehkräften und/oder Biegungen ausgesetzt.

Die Lebensdauer von einem Riemen wird durch die Dehnung des Riemens, insbesondere die Dehnung in Umfangsrichtung, zumindest mitbestimmt. Die Umdrehungsrate, mit der sich der Riemen bewegt, und/oder die Leistung, die zum Antrieb des Riemens notwendig ist, kann über die Belastung des Riemens Aufschluss geben. Mit der Dehnung des Riemens zusammenhängend ist ein Abbau der Vorspannkraft des Riemens. Bis zu einem gewissen Grad kann ein Vorspannungsabbau durch optional verwendbare Spannsysteme ausgeglichen werden. Besonders anfällig gegenüber einem Vorspannungsabbau sind hingegen Riementriebe ohne ein Spannsystem, was sich insbesondere bei reibschlüssigen Riemenantrieben in einem unmittelbar höheren Schlupf des Riemens gegenüber der Riemenscheibe äußert, wodurch die Temperatur im Riemen und dessen Verschleiß ansteigt.

Als Antriebsriemen sind Zahnriemen bekannt, ebenso auch Flachriemen, Keilriemen oder Keilrippenriemen.

Die DE102018215478A1 offenbart ein System zur Ermittlung einer Längsdehnung eines Riemens. Das System weist den Riemen, eine Antriebsvorrichtung, einen Transmitter und eine Auswerteeinheit auf. In dem Riemen sind zwei in einem vorbestimmten Abstand zueinander angeordnete, ferromagnetische Markierungsteile eingebettet. Der Transmitter ist zum Erzeugen eines Referenzwechselfelds ausgebildet, das von jedem der beiden Markierungsteile verändert wird, wenn das jeweilige Markierungsteil beim Umlauf des Riemens durch das Referenzwechselfeld hindurchbewegt wird. Die durch die entsprechende Wechselwirkung zwischen dem jeweiligen Markierungsteil und dem Referenzwechselfeld entstehende Veränderung des Referenzwechselfelds kann von dem Transmitter erfasst werden. Die Auswerteeinheit ist ausgebildet, basierend auf dem Referenzabstand der ferromagnetischen Markierungsteile, der Riemengeschwindigkeit, der ersten Erfassungszeit und der zweiten Erfassungszeit eine Längsdehnung des Riemens zu ermitteln. Besonders nachteilig ist hierbei, dass nur eine Messung je Umdrehung des Riemens erfolgen kann. Die Genauigkeit der Messung kann durch diesen Umstand nachteilig beeinflusst werden. Eine gleichzeitige Schlupfmessung ist mit diesem System nicht möglich, da die Überwachung der Drehzahlen des Antriebsrotors bzw. der Riemenscheibe fehlt. Hierfür sind weitere Messvorrichtungen erforderlich, was die Komplexität des Messsystems und die Kosten negativ beeinflusst. Weiterhin ist eine vorherige Kalibrierung des Systems erforderlich, indem durch Einstellung des Abstandes der Transmitter auf den Abstand der Markierungsteile im unbelasteten Zustand des Riemens ein Referenzabstand definiert wird. Dies erfordert einen zusätzlichen manuellen Einstellungsaufwand und erhöht die Gefahr von Messungenauigkeiten, wenn sich der Sensorabstand in Folge von beispielsweise Vibrationen verändert.

Die DE 20 2016 008 121 U1 offenbart einen Riemenantrieb, bestehend aus Riemenscheibe, Riemen und Überwachungseinrichtung. An dem Riemen und an der Riemenscheibe ist jeweils eine Markierung angebracht. Es wird ein Signal ausgelöst, wenn die Markierungen des Riemens und der Antriebsscheibe sich gegenüberstehen. Die Markierungen zur Identifikation der Position können auf verschiedenen Sensortechnologien beruhen, z.B. optischen, induktiven, kapazitiven oder magnetischen Effekten beruhen.

Mithilfe der dort beschriebenen Überwachung können unter anderem bei Zahn- oder Synchronriemen die Anzahl der Umläufe über die Lebensdauer überwacht werden.

Ein ähnliches Verfahren beschreibt die DE 10 2019 206 169 A1, die ein Verfahren zur Überwachung eines Riementriebs beschreibt. Hierbei weist der Riemen mindestens eine erste Markierung und mindestens ein dem Riemen zugeordnetes erstes Sensorelement auf. Weiterhin weist der Rotor des Antriebsmotors eine weitere Markierung und ein dem Antriebsmotor zugeordnetes Sensorelement auf. Insbesondere dient das Überwachungsverfahren dazu, einen visuell unzugänglichen Riementrieb für Lenksysteme auf Zahnübersprünge zu überwachen, indem ein Winkelversatz zwischen Riemen und Riemenscheibe detektiert wird.

Die WO02/079747 A2 offenbart auch eine Vorrichtung zur Überwachung eines Riemens mittels eines Markierungsteilpaar.

Nachteiliger Weise findet in den genannten Schriften parallel keine Kraftmessung an dem Riemen statt, die für eine vollumfängliche Überwachung des Riementriebsystems notwendig sein kann.

Aufgabe

Der Erfindung liegt die Aufgabe zugrunde, eine Vorrichtung sowie ein Verfahren zur Kraft- und Schlupfmessung an Antriebsriemen unter Nutzung eines gemeinsamen Sensorsystems bereit zu stellen. Insbesondere besteht die Aufgabe darin, mit der Vorrichtung und/oder dem Verfahren eine Schlupfregelung des Antriebsriemens zu realisieren. Darüber hinaus sollen die generierten Informationen über die Kraftübertragung und den Schlupf des Antriebsriemens dazu genutzt werden, Unregelmäßigkeiten oder Verschleißerscheinungen des Antriebsystems oder der durch dieses Antriebssystem angetriebenen Arbeitsmaschine frühzeitig und vor Beginn eines Bauteilversagens zu identifizieren.

Lösung der Aufgabe

Die Lösung dieser Aufgabe ergibt sich durch eine erfindungsgemäße Vorrichtung mit den Merkmalen des Hauptanspruchs, ein Vorsatzgerät einer landwirtschaftlichen Maschine mit den Merkmalen des Anspruchs 9 sowie ein erfindungsgemäßes Verfahren mit den Merkmalen des Anspruchs 10. Die Merkmale des Anspruchs 13 offenbaren die Verwendung des erfindungsgemäßen Verfahrens.

Weitere vorteilhafte Ausbildungen sind in den abhängigen Ansprüchen offenbart.

Vorteile der Erfindung

Vorgesehen ist eine erfindungsgemäße Vorrichtung zur Ermittlung einer Längsdehnung und einer mittleren Geschwindigkeit eines Riemens, sowie zur Ermittlung einer Geschwindigkeit mindestens einer Riemenscheibe. Die Vorrichtung umfasst hierbei den Riemen mit vorbestimmter Längssteifigkeit, wobei die Länge des Riemens unabhängig vom Betriebszustand konstant ausgebildet ist. Der Riemen weist mindestens ein erstes Markierungsteil, ein zweites Markierungsteil, ein drittes Markierungsteil und ein viertes Markierungsteil auf, wobei das erste und das zweite Markierungsteil ausgebildet sind, ein erstes Markierungsteilpaar zu bilden und das dritte und vierte Markierungsteil ausgebildet sind, ein zweites Markierungsteilpaar zu bilden.

Die Zuordnung der Markierungsteile zu Markierungsteilpaaren kann beispielsweise die abschnittsweise Überwachung der Zustände des Riemens ermöglichen. Weiterhin ist eine Antriebsvorrichtung mit mindestens zwei, in einem Achsabstand zueinander angeordneten und durch den Riemen zumindest teilweise umschlungenen Riemenscheiben mit vorbestimmtem Durchmesser, sowie eine Übertragungsvorrichtung, umfassend mindestens zwei externe Lesegeräte und eine Auswerte- und Regelungseinheit vorgesehen, die geeignet ist, die Drehzahl und / oder das Drehmoment der Antriebsvorrichtung zu regeln, wobei während des Riemenumlaufs durch jedes Markierungsteilan den externen Lesegeräten identifizierbare Signale erzeugbar und an die Auswerte- und Regelungseinheit ausgebbar sind.

Jedes der Markierungsteile der Markierungsteilpaare kann auch eine Identifikationskennung übertragen, womit das übertragene und durch eines der externen Lesegeräte erfasste Signal jedem individuellen Markierungsteil zugeordnet werden kann. Durch Zuordnung der Signale zu den einzelnen Markierungsteilen kann auf vorteilhafte Weise erst eine Zuordnung der Signale der Markierungsteile zu Markierungsteilpaaren erfolgen. Es kann demnach durch jedes der externen Lesegeräte jedes der Markierungsteile der Markierungsteilpaare sowohl detektiert als auch identifiziert werden.

Der Riemen ist in einer Umfangsrichtung ringförmig umlaufend ausgebildet und von der Antriebsvorrichtung in Umfangsrichtung angetrieben, wobei der Riemen ein lastübertragendes Riementrum, auch Lasttrum genannt, und ein dem Lasttrum gegenüberliegend angeordnetes Leertrum aufweist.

Mit anderen Worten gesagt verändern sich bei Leistungsübertragung durch den Riemen die Kraftverhältnisse im den Riementrumen. Eine durch die mit einem Antriebsmotor verbundene Riemenscheibe in das Lasttrum des Riemens eingeleitete und zu übertragene Leistung führt zu einem Kraftanstieg im Lasttrum, welcher abhängig von der Steifigkeit des Riemens eine Längung des Riemens im Lasttrum bewirkt. Der Kraftanstieg im Lasttrum führt mit demselben Betrag zu einer Verringerung der Kraft im Leertrum, mit einer von der Steifigkeit des Riemens abhängigen Verkürzung des Leertrums. Diese Voraussetzung ist gültig, solange das Leertrum eine Vorspannkraft von >0 Newton aufweist. Die Summe der Kräfte im Riemen und die Länge des Riemens bleibt somit auch während des Betriebes unter dynamische Lasteinwirkung konstant.

Die Markierungsteile der Markierungsteilpaare des Riemens sind in einem Zustand ohne Leistungsübertragung jeweils in einem vorbestimmten Referenzabstand in Umfangsrichtung hintereinander angeordnet.

Der unbelastete Zustand ist als ein statischer Zustand ohne Leistungsübertragung durch den Riemen zu verstehen. Der Riemen kann in diesem Zustand bereits statisch vorgespannt sein.

Der Referenzabstand der Markierungsteile des ersten Markierungsteilpaares ist ausgebildet, sich bei einer Leistungsübertragung des Riemens in einen ersten Messabstand zu verändern, wobei der Referenzabstand der Markierungsteile des zweiten Markierungsteilpaares bei einer Leistungsübertragung des Riemens ausgebildet ist, sich in einen zweiten Messabstand zu verändern.

Wie zuvor erläutert bedingt eine Leistungsübertragung einen Kraftanstieg sowie eine Dehnung im Lasttrum, sowie einen Kraftabbau und eine Verkürzung im Leertrum.

Mit anderen Worten gesagt besteht gemäß dem Hooke'schen Gesetz ein proportionaler Zusammenhang zwischen einer Veränderung der Kraft und der Länge im Last- und Leertrum. Die Summe der Kräfte im Riemen und die Länge des Riemens bleibt somit auch während des Betriebes unter dynamische Lasteinwirkung konstant.

Weiterhin weist mindestens eine der Riemenscheiben mindestens ein Markierungteil auf, wobei während des Umlaufs der Riemenscheibe das Markierungsteil der Riemenscheibe ausgebildet ist, an einem der externen Lesegeräte ein identifizierbares Signal zu erzeugen undan die Auswerte- und Regelungseinheit auszugeben.

Auch für das Markierungsteil der Riemenscheibe gilt wie eingangs beschrieben, dass dieses neben dem Signal zur Zuordnung des Signals zu dem Markierungsteil auch eine Identifikationskennung an das externe Lesegerät übermittelt werden kann.

Die Übertragungsvorrichtung ist kontaktfrei zu dem Riemen derart angeordnet, sodass die Markierungsteile der Markierungsteilpaare des Riemens und der Riemenscheibe nacheinander an der Übertragungsvorrichtung vorbeiführbar sind. Die Auswerte- und Regelungseinheit ist konfiguriert, aus jeweils zwei Signalen jeweils eine Laufzeit zu ermitteln. Mit anderen Worten gesagt kann die Laufzeit als Zeitdifferenz zwischen zwei erfassten Signalen der Markierungsteile ermittelt werden.

Die Auswerte- und Regelungseinheit ist konfiguriert, eine mittlere Geschwindigkeit des Riemens basierend auf der ermittelten Laufzeit eines der Markierungsteile der Markierungsteilpaare über die Umfangslänge über einen Umlauf des Riemens zu ermitteln. Weiterhin ist die Auswerte- und Regelungseinheit konfiguriert, eine Geschwindigkeit der Riemenscheibe basierend auf der ermittelten Laufzeit des Markierungsteils der Riemenscheibe zu ermitteln.

Wie eingangs beschrieben ist die Länge des Riemens vorbestimmt und konstant. Während sich die Länge in den Riementrumen abschnittsweise durch eine dynamische Lastbeanspruchung verändern kann, bleibt die Gesamtlänge des Riemens durch den erläuterten Zusammenhang des Kräftegleichgewichtes im gesamten Riementrieb konstant. Daher kann die mittlere Geschwindigkeit des Riemens über die ermittelten Laufzeiten der Markierungsteile während einer Umdrehung des Riemens und die vorbestimmte Riemenlänge ermittelt werden. Die Riemenscheibe weist ebenfalls einen vorbestimmten Durchmesser auf. Die Ermittlung der Geschwindigkeit der Riemenscheibe kann wie am Beispiel des Riemens erläutert auf identische Weise erfolgen.

Der Riemen weist ein kraftübertragenes Riementrum, auch Lasttrum genannt und ein lastfreies Riementrum, auch Leertrum genannt, auf. Das Last- und/oder Leertrum erstreckt sich über den Bereich zwischen zwei Riemenscheiben. Das Last- und Leertrum sind im Falle eines Riementriebes mit zwei Riemenscheiben einander gegenüberliegend angeordnet und weisen eine identische Trumlänge auf. In einem Zustand ohne Leistungsübertragung durch den Riementrieb herrschen im Last- und Leertrum identische Kraftverhältnisse. Diese ergeben sich im Wesentlichen durch eine statische Vorspannkraft, mit welcher der Antriebsriemen zwischen den Riemenscheiben gespannt ist. Die statische Vorspannkraft des Riemens ist für eine zuverlässige Leistungsübertragung erforderlich und kann anhand der Anforderungen an die zu übertragene Leistung durch den Riemen bedarfsweise gewählt und angepasst werden.

Gemäß einem Aspekt der erfindungsgemäßen Vorrichtung ist in einem Zustand des Riemens ohne Leistungsübertragung jeweils im Last- und Leertrum über den Umfang des Riemens mindestens ein aus den Markierungsteilen gebildetes Markierungsteilpaar angeordnet. Die Zuordnung der Markierungsteile zu Markierungsteilpaaren kann auf vorteilhafte Weise die Überwachung der Zustände des Riemens im Last- und Leertrum ermöglichen, wenn jeweils eines der Markierungsteilpaare in dem Last- und dem Leertrum angeordnet ist.

Es erweist sich hierbei als besonders vorteilhaft, dass erfindungsgemäß sowohl das Last- als auch das Leertrum in einem Zustand des Riemens ohne Leistungsübertragung jeweils mindestens ein aus den Markierungsteilen gebildetes Markierungsteilpaar aufweisen. So können permanent Informationen des Last- und Leertrums bereitgestellt und untereinander verglichen werden.

Weiterhin ist die Auswerte- und Regelungseinheit dazu konfiguriert, eine Längsdehnung des Riemens basierend auf der mittleren Riemengeschwindigkeit, der Differenz der Laufzeiten der zwei aufeinanderfolgenden Markierungsteile der Markierungsteilpaare des Riemens sowohl im Lasttrum als auch im Leertrum, sowie dem daraus ermittelten Messabstand der Markierungsteile der Markierungsteilpaare sowohl im Lasttrum als auch im Leertrum zueinander, sowie dem Referenzabstand als Mittelwert aus den ermittelten Messabständen zu ermitteln.

Mit anderen Worten gesagt kann die Auswerte- und Regelungseinheit eine Längsdehnung des Riemens ermitteln. Hierzu können die externen Lesegeräte beim Passieren der Markierungsteile Signale erfassen. Durch die vorbestimmte und in der Auswerte- und Regelungseinheit hinterlegten Umfangslänge des Riemens kann anhand der Laufzeit eines Markierungsteils zwischen einem ersten Signal an einem externen Lesegerät und einem, nach einem erfolgten Umlauf des Riemens, zweiten Signal an einem externen Lesegerät die mittlere Riemengeschwindigkeit ermittelt werden. Weiterhin ist die Auswerte- und Regelungseinheit dazu konfiguriert, basierend auf den Laufzeiten der zwei aufeinanderfolgenden Markierungsteile der Markierungsteilpaare des Riemens sowohl im Lasttrum als auch im Leertrum, einen Messabstand der Markierungsteile der Markierungsteilpaare sowohl im Lasttrum als auch im Leertrum zueinander zu ermitteln. Mit anderen Worten gesagt entspricht der Messabstand dem Abstand der Markierungsteile der Markierungsteilpaare im dynamischen Betrieb. Sobald der Riemen eine Leistung überträgt verändert sich der Abstand der Markierungsteile der Markierungsteilpaare derart, dass sich der Messabstand der Markierungsteile des Markierungsteilpaares im Lasttrum vergrößert, während sich der Messabstand der Markierungsteile des Markierungsteilpaares im Leertrum betragsmäßig gleich verringert. Eine Vergrößerung des Messabstandes der Markierungsteile des Markierungsteilpaares im Lasttrum bedingt somit immer auch eine betragsmäßig identische Verringerung des Messabstandes der Markierungsteile des Markierungsteilpaares im Leertrum.

Durch die beschriebene Abhängigkeit der Messabstandsveränderung der Markierungsteile der Markierungsteilpaare im Last- und Leertrum kann der Referenzabstand als Mittelwert aus den ermittelten Messabständen ermittelt werden. Unter Einbezug der mittleren Riemengeschwindigkeit, dem ermittelten Messabstand der Markierungsteile der Markierungsteilpaare sowohl im Lasttrum als auch im Leertrum zueinander, sowie dem Referenzabstand, kann mit der Auswerte- und Regelungseinheit die Längsdehnung des Riemens ermittelt werden.

Die Auswerte- und Regelungseinheit ist dazu ausgebildet, eine Zugkraft und Zugkraftdifferenz im Lasttrum des Riemens über eine dem Riemen zugeordnete und in der Auswerte- und Regelungseinheit hinterlegten Federsteifigkeit sowie einer Abstandsdifferenz der Markierungsteile der Markierungsteilpaare des Riemens im Lasttrum ermitteln zu können. Die Information zur Federsteifigkeit kann beispielsweise auch über einen zu scannenden Barcode am Riemen zur Verfügung gestellt werden.

Mit anderen Worten gesagt kann die Zugkraftdifferenz im Lasttrum durch Multiplikation der Federsteifigkeit des Riemens mit der Abstandsdifferenz der dem Lasttrum zugeordneten Markierungsteile der Markierungsteilpaare ermittelt werden. Die Zugkraftdifferenz kann hierbei dem Kraftanteil entsprechen, der, durch die über die Antriebsriemenscheibe eingeleiteten Antriebsleistung in den Riementrieb, zu der statischen Vorspannkraft hinzuaddiert wird. Aus der Summe der statischen Vorspannkraft und der Zugkraftdifferenz kann eine Gesamtkraft ermittelt werden, die in dem Lasttrum herrscht.

Weiterhin ist die Auswerte- und Regelungseinheit auch dazu konfiguriert, einen Schlupf zwischen Riemen und Riemenscheibe basierend auf dem Verhältnis der von Riemen und Riemenscheibe ermittelten mittleren Geschwindigkeiten ermitteln zu können. Mit anderen Worten gesagt kann durch die Auswerte- und Regelungseinheit sowohl die Geschwindigkeit der Riemenscheibe als auch die mittlere Geschwindigkeit des Riemens überwacht werden. Eine Geschwindigkeitsdifferenz zwischen Riemenscheibe und Riemen bedeutet, dass ein Schlupf zwischen Riemen und Riemenscheibe vorhanden ist. Abhängig von der Anwendung kann, insbesondere bei reibschlüssigen Antriebsriemen in Form von Keil- oder Keilrippenriemen, ein Schlupf des Riemens toleriert oder auch notwendig sein. Ein zu hoher Schlupf kann jedoch zu einem erhöhten Verschleiß in Folge von Abrasion oder einer zu hohen Temperatur führen. Die Ursache für einen erhöhten Schlupf kann in einer für die zu übertragene Antriebsleistung zu geringen Vorspannung des Riemens liegen. Durch die beschriebene Schlupfmessung kann auf vorteilhafte Weise ein frühzeitiger Hinweis auf eine zu geringe Vorspannung des Riemens erfolgen, wodurch eine nachhaltige Beschädigung oder ein Ausfall des Riemens vermieden werden kann.

Insgesamt erweist es sich als besonders vorteilhaft, dass mit nur einem Sensorsystem sowohl eine Längsdehnung des Riemens als auch eine Messung der mittleren Geschwindigkeit eines Riemens und einer Riemenscheibe erfolgen kann. So können auf eine besonders kostengünstige Art und Weise viele Messwerte gewonnen werden.

Gemäß einem weiteren Aspekt der erfindungsgemäßen Vorrichtung sind die Markierungsteile als akustische Oberflächenwellensensoren ausgebildet. Akustische Oberflächenwellensensoren, auch surface acoustic wave-Sensoren, kurz SAW-Sensoren genannt, können sich auf besonders vorteilhafte Weise für die Anwendung in Riementrieben eignen, da sie den während der Vulkanisation des Riemens herrschenden hohen Temperaturen von zum Teil mehr als 200°C standhalten können, als auch aufgrund eines geringen Energiebedarfes zum Senden eines Sensorprotokolls bei einer hohen Geschwindigkeit des Riemens verlässlich funktionieren können. Hierbei ist den an oder in dem Riemen befindlichen SAW-Sensoren ein externes Lesegerät zugeordnet, welches beispielsweise fest an einem Maschinengestell verbaut und dem Riemen radial oder axial beabstandet angeordnet sein kann. Das externe Lesegerät kann ein elektromagnetisches Feld ausstrahlen, welches bei Passieren eines SAW-Sensors diesem die zur Übertragung eines Sensorprotokolls erforderliche Energie zur Verfügung stellt. Das durch den SAW-Sensor an das externe Lesegerät übermittelte Sensorprotokoll kann mit einer Identifikation versehen sein, sodass auch bei Vorhandensein mehrerer Sensoren eine Zuordnung der Sensorprotokolle zu den einzelnen Sensoren erfolgen kann.

Gemäß einem weiteren Aspekt der erfindungsgemäßen Vorrichtung sind die Markierungsteile als radio-frequency-identification, kurz RFID-Transponder ausgebildet. Dies kann auf besonders vorteilhafte Weise eine kostengünstige Alternative zu den zuvor beschriebenen SAW-Sensoren darstellen.

Gemäß einer weiteren vorteilhaften Ausführung der erfindungsgemäßen Vorrichtung sind die Markierungsteile als ferromagnetische Markierungsteile ausgebildet. Auf besonders vorteilhafte Weise können diese derart ausgebildet sein, dass ferromagnetische Partikel in das Elastomer eines Riemens eingebracht sind. Auf diese Weise kann eine homogene Materialverteilung in dem Riemen erreicht werden, ohne dass Fremdkörper in Form eines Sensorelementes den Riemen schwächen und eine Beschädigung des Riemens herbeiführen können.

Gemäß einem weiteren Aspekt der erfindungsgemäßen Vorrichtung weist die angetriebene Riemenscheibe mindestens ein Markierungsteil auf. Dies kann von besonders großem Vorteil sein, wenn über das Markierungsteil der Riemenscheibe beispielsweise die Drehzahl des mit der Riemenscheibe gekoppelten Antriebsmotors überwacht werden soll. Auf diese Weise kann die Drehzahl des Antriebsmotors direkt und ohne weitere dazwischen gekoppelte und das Messergebnis verfälschende Übertragungselemente überwacht werden.

Gemäß einem weiteren Aspekt der erfindungsgemäßen Vorrichtung ist jeweils eines der externen Lesegeräte im Bereich des Einlaufs und des Auslaufs des Riemens in/aus die/der Riemenscheibe angeordnet. Es kann hierdurch auf vorteilhafte Weise sichergestellt werden, dass jeweils ein externes Lesegerät dem Last- und Leertrum zugeordnet ist. Durch die Anordnung der externen Lesegeräte in unmittelbarer Nähe zu einer Riemenscheibe kann eine präzise Signalerfassung erfolgen, da das Riementrum in diesem Bereich noch keiner großen Schwingungsamplitude unterliegt. Zu große Schwingungen des Riementrums können die Signalerfassung durch variierende Abstände zwischen dem externen Lesegerät und dem Markierungsteil negativ beeinflussen.

Es erweist sich gemäß einem weiteren Aspekt der erfindungsgemäßen Vorrichtung als besonders vorteilhaft, dass die Auswerte- und Regelungseinheit bei Überschreiten von vorbestimmten und in der Auswerte- und Regelungseinheit hinterlegten Grenzwerten einer Geschwindigkeitsdifferenz zwischen Riemen und Riemenscheibe dazu konfiguriert ist, das Antriebsmoment oder die Antriebsdrehzahl derart regeln zu können, dass sich die Geschwindigkeitsdifferenz innerhalb definierter Grenzwerte bewegt. Mit anderen Worten gesagt können in der Auswerte- und Regelungseinheit zulässige Grenzwerte für den Schlupf zwischen Riemen und Riemenscheibe hinterlegt sein. Die Riemengeschwindigkeit kann abhängig von der Anzahl der Markierungsteile der Markierungsteilpaare des Riemens mindestens ein Mal je Umdrehung des Riemens ermittelt und mit der Geschwindigkeit der Riemenscheibe verglichen oder ins Verhältnis gesetzt werden. Eine daraus ermittelte Geschwindigkeitsdifferenz oder ein ermittelter Schlupf kann daraufhin mit dem hinterlegten Grenzwert verglichen werden. Sollte die Geschwindigkeitsdifferenz zwischen Riemen und Riemenscheibe über den definierten Grenzwert hinausgehen, so kann die Antriebsdrehzahl oder das Antriebsmoment reduziert werden. Unter den angepassten Leistungsdaten kann eine weitere Erfassung der Geschwindigkeitswerte von Riemen und Riemenscheibe erfolgen, die erneut auf das Einhalten des definierten Grenzwertes für den Schlupf verglichen werden kann. Es können gegebenenfalls weitere Leistungsanpassungen des Antriebs folgen, bis sich der Schlupf innerhalb des definierten Grenzwertes bewegt. So kann auf vorteilhafte Weise einem erhöhten Verschleiß des Riemens in Folge hoher Temperaturen durch einen zu hohen Schlupf vorgebeugt werden.

Gemäß einem weiteren Aspekt der erfindungsgemäßen Vorrichtung ist die Auswerte- und Regelungseinheit mit weiteren Messeinrichtungen von Maschinenelementen gekoppelt. Die Auswerte- und Regelungseinheit umfasst hierfür einen Speicher zur Sicherung historischer Sensordaten und zur Sicherung historischer Kraftverlaufsdaten des Riemens. Weiterhin ist die Auswerte- und Regelungseinheit ausgebildet, die historischen Kraftverlaufsdaten des Riemens innerhalb von vorgegebenen und in dem Speicher der Auswerte- und Regelungseinheit hinterlegten Grenzwerten überwachen zu können und unter Einbezug der historischen Sensordaten weiterer Maschinenelemente aus dem Speicher der Auswerte- und Regelungseinheit Rückschluss auf den Verschleiß von Maschinenelementen außerhalb der Vorrichtung ziehen zu können.

Mit anderen Worten gesagt umfasst die Auswerte- und Regelungseinheit einen Speicher, der neben den zuvor beschriebenen Sensordaten der Vorrichtung weitere Sensordaten von Messeinrichtungen anderer Maschinenelemente sichern kann. Diese erfassten Sensordaten können zur Überwachung von langfristigen Veränderungen in einem Speicher abgelegt werden. Insbesondere kann die Betrachtung der Veränderung der Kraftverlaufsdaten des Riemens in Verbindung mit weiteren Sensordaten von Messeinrichtungen anderer Maschinenelemente von großer Bedeutung sein.

Dies kann beispielhaft an einem Vorsatzgerät einer landwirtschaftlichen Maschine erläutert werden. Hierbei kann es sich um ein Schneidwerk eines Mähdreschers handeln. Vorteilhafter Weise kann durch eine Messeinrichtung des Schneidwerkes das Erntevolumen pro Zeit erfasst werden. Durch Vergleich der Kraftverlaufsdaten des Riemens, welche durch die erfindungsgemäße Vorrichtung ermittelt werden können, mit dem Verlauf des Erntevolumens pro Zeit des Schneidwerkes kann beispielsweise ein Verschleiß der durch den Riemen angetriebenen Messer des Schneidwerkes identifiziert werden. Steigt beispielsweise die Kraft im Riemen, während das Erntevolumen sinkt, so können die Messer stumpf oder beschädigt sein und es kann dementsprechend ein Rückschluss auf einen erforderlichen Wechsel der Messer gezogen werden.

Eine weitere vorteilhafte Ausbildung sieht ein Vorsatzgerät einer landwirtschaftlichen Maschine mit wenigstens einer erfindungsgemäßen Vorrichtung zur Überwachung von mit Riemen angetriebenen Einrichtungen vor. Auf diese Weise können die zuvor erläuterten Vorteile bei verschiedenen Riementriebsystemen angewendet werden. Insbesondere bei landwirtschaftlichen Maschinen steht eine hohe Verfügbarkeit während der Erntezeit im Fokus. Daher kommt der Vermeidung von verschleißbedingten Maschinenausfällen eine besonders große Bedeutung zu, weshalb die Überwachung von Riementrieben von besonders großer Relevanz sein kann.

Eine weitere vorteilhafte Ausbildung sieht ein Verfahren zur Ermittlung einer Längsdehnung und einer mittleren Geschwindigkeit eines Riemens, sowie zur Ermittlung der Geschwindigkeit mindestens einer Riemenscheibe vor. Vorgesehen ist hierzu der Riemen mit einer vorbestimmten Längssteifigkeit, wobei die Länge des Riemens unabhängig vom Betriebszustand konstant ist.

Der Riemen weist mindestens ein erstes Markierungsteil, ein zweites Markierungsteil, ein drittes Markierungsteil und ein viertes Markierungsteil auf, wobei das erste und das zweite Markierungsteil ein erstes Markierungsteilpaar und das dritte und vierte Markierungsteil ein zweites Markierungsteilpaar bilden. Die Zuordnung der Markierungsteile zu Markierungsteilpaaren kann beispielsweise die abschnittsweise Überwachung der Zustände des Riemens ermöglichen. Weiterhin vorgesehen ist eine Antriebsvorrichtung mit mindestens zwei, in einem Achsabstand zueinander angeordneten und durch den Riemen zumindest teilweise umschlungenen Riemenscheiben mit vorbestimmtem Durchmesser, sowie eine Übertragungsvorrichtung, umfassend mindestens zwei externe Lesegeräte und eine Auswerte- und Regelungseinheit, die die Drehzahl und / oder das Drehmoment der Antriebsvorrichtung regelt, wobei während des Riemenumlaufs durch jedes Markierungsteil an den externen Lesegeräten identifizierbare Signale erzeugt und an die Auswerte- und Regelungseinheit ausgegeben werden. Mit anderen Worten gesagt kann jedes der Markierungsteile der Markierungsteilpaare auch eine Identifikationskennung übertragen, womit das übertragene und durch eines der externen Lesegeräte erfasste Signal jedem individuellen Markierungsteil zugeordnet werden kann. Durch Zuordnung der Signale zu den einzelnen Markierungsteilen kann auf vorteilhafte Weise erst eine Zuordnung der Signale der Markierungsteile zu Markierungsteilpaaren erfolgen. Es kann demnach durch jedes der externen Lesegeräte jedes der Markierungsteile der Markierungsteilpaare sowohl detektiert als auch identifiziert werden.

Der Riemen läuft in einer Umfangsrichtung ringförmig um die Riemenscheiben herum und ist von der Antriebsvorrichtung in Umfangsrichtung angetrieben, wobei der Riemen ein lastübertragendes Riementrum, auch Lasttrum genannt, und ein dem Lasttrum gegenüberliegend angeordnetes Leertrum aufweist.

Mit anderen Worten gesagt verändern sich bei Leistungsübertragung durch den Riemen die Kraftverhältnisse im den Riementrumen. Eine durch die mit einem Antriebsmotor verbundene Riemenscheibe in das Lasttrum des Riemens eingeleitete und zu übertragene Leistung führt zu einem Kraftanstieg im Lasttrum, welcher abhängig von der Steifigkeit des Riemens eine Längung des Riemens im Lasttrum bewirkt. Der Kraftanstieg im Lasttrum führt mit demselben Betrag zu einer Verringerung der Kraft im Leertrum, mit einer von der Steifigkeit des Riemens abhängigen Verkürzung des Leertrums. Diese Voraussetzung ist gültig, solange das Leertrum eine Vorspannkraft von >0 Newton aufweist. Die Summe der Kräfte im Riemen und die Länge des Riemens bleibt somit auch während des Betriebes unter dynamische Lasteinwirkung konstant.

Die Markierungsteile der Markierungsteilpaare des Riemens sind in einem Zustand ohne Leistungsübertragung jeweils in einem vorbestimmten Referenzabstand in einem unbelasteten Zustand des Riemens in Umfangsrichtung hintereinander angeordnet. Der unbelastete Zustand ist als ein statischer Zustand ohne Leistungsübertragung durch den Riemen zu verstehen. Der Riemen kann in diesem Zustand bereits statisch vorgespannt sein.

Der Referenzabstand der Markierungsteile des ersten Markierungsteilpaares verändert sich bei einer Leistungsübertragung des Riemens in einen ersten Messabstand, wobei sich der Referenzabstand der Markierungsteile des zweiten Markierungsteilpaares bei einer Leistungsübertragung des Riemens in einen zweiten Messabstand verändert.

Wie zuvor erläutert bedingt eine Leistungsübertragung einen Kraftanstieg sowie eine Dehnung im Lasttrum, sowie einen Kraftabbau und eine Verkürzung im Leertrum.

Mit anderen Worten gesagt besteht gemäß dem Hooke'schen Gesetz ein proportionaler Zusammenhang zwischen einer Veränderung der Kraft und der Länge im Last- und Leertrum. Die Summe der Kräfte im Riemen und die Länge des Riemens bleibt somit auch während des Betriebes unter dynamische Lasteinwirkung konstant.

Weiterhin weist mindestens eine der Riemenscheiben mindestens ein Markierungsteil auf, wobei während des Umlaufs der Riemenscheibe das Markierungsteil der Riemenscheibe an einem der externen Lesegeräte ein identifizierbares Signal erzeugt und an die Auswerte- und Regelungseinheit ausgibt. Auch für das Markierungsteil der Riemenscheibe gilt wie eingangs beschrieben, dass dieses neben dem Signal zur Zuordnung des Signals zu dem Markierungsteil auch eine Identifikationskennung an das externe Lesegerät übermittelt werden kann.

Die Übertragungsvorrichtung ist kontaktfrei zu dem Riemen derart angeordnet, sodass die Markierungsteile der Markierungsteilpaare des Riemens und der Riemenscheibe nacheinander an der Übertragungsvorrichtung vorbeigeführt werden. Die Auswerte- und Regelungseinheit ermittelt dann aus jeweils zwei Signalen eine Laufzeit.

Daraufhin ermittelt die Auswerte- und Regelungseinheit aus den Laufzeiten eine mittlere Geschwindigkeit des Riemens und eine Geschwindigkeit der Riemenscheibe.

Wie eingangs beschrieben ist die Länge des Riemens vorbestimmt und konstant. Während sich die Länge in den Riementrumen abschnittsweise durch eine dynamische Lastbeanspruchung verändern kann, bleibt die Gesamtlänge des Riemens durch den erläuterten Zusammenhang des Kräftegleichgewichtes im gesamten Riementrieb konstant. Daher kann die mittlere Geschwindigkeit des Riemens über die ermittelten Laufzeiten der Markierungsteile während einer Umdrehung des Riemens und die vorbestimmte Riemenlänge ermittelt werden. Die Riemenscheibe weist ebenfalls einen vorbestimmten Durchmesser auf. Die Ermittlung der Geschwindigkeit der Riemenscheibe kann wie am Beispiel des Riemens erläutert auf identische Weise während einer Umdrehung der Riemenscheibe erfolgen.

Das erfindungsgemäße Verfahren ist gekennzeichnet durch die folgenden Verfahrensschritte:

a) Erzeugen eines Signals des ersten Markierungsteils des Riemens an dem ersten externen Lesegerät,

b) Erzeugen eines Signals des zweiten Markierungsteils des Riemens an dem ersten externen Lesegerät,

c) Erzeugen eines Signals des dritten Markierungsteils des Riemens an dem ersten externen Lesegerät,

d) Erzeugen eines Signals des vierten Markierungsteils des Riemens an dem ersten externen Lesegerät,

e) Erzeugen eines Signals des ersten Markierungsteils des Riemens an dem zweiten externen Lesegerät,

f) Erzeugen eines Signals des zweiten Markierungsteils des Riemens an dem zweiten externen Lesegerät,

g) Erzeugen eines Signals des dritten Markierungsteils des Riemens an dem zweiten externen Lesegerät,

h) Erzeugen eines Signals des vierten Markierungsteils des Riemens an dem zweiten externen Lesegerät,

i) Ermittlung einer Laufzeit aus jeweils zwei Signalen durch die Auswerte- und Regelungseinheit,

j) Ermittlung der mittleren Geschwindigkeit des Riemens durch die Auswerte- und Regelungseinheit basierend auf der ermittelten Laufzeit eines der Markierungsteile der Markierungsteilpaare über die Umfangslänge über einen Umlauf des Riemens,

k) Ermittlung der Differenz der Laufzeiten der zwei aufeinanderfolgenden Markierungsteile der Markierungsteilpaare des Riemens an dem dem Lasttrum zugeordneten externen Lesegerät durch die Auswerte- und Regelungseinheit,

l) Ermittlung des Messabstandes der zwei aufeinanderfolgenden Markierungsteile der Markierungsteilpaare im Lasttrum über die ermittelte mittlere Geschwindigkeit des Riemens und die ermittelte Differenz der Laufzeiten der zwei aufeinanderfolgenden Markierungsteile der Markierungsteilpaare des Riemens,

m) Ermittlung der Differenz der Laufzeiten der zwei aufeinanderfolgenden Markierungsteile der Markierungsteilpaare des Riemens an dem dem Leertrum zugeordneten externen Lesegerät durch die Auswerte- und Regelungseinheit,

n) Ermittlung des Messabstandes der zwei aufeinanderfolgenden Markierungsteile der Markierungsteilpaare im Leertrum über die ermittelte mittlere Geschwindigkeit des Riemens und die ermittelte Differenz der Laufzeiten der zwei aufeinanderfolgenden Markierungsteile der Markierungsteilpaare des Riemens,

o) Ermittlung der Abstandsdifferenz der zwei aufeinanderfolgenden Markierungsteile der Markierungsteilpaare des Riemens im Lasttrum und im Leertrum zueinander durch die Auswerte- und Regelungseinheit,

p) Ermittlung des Referenzabstandes der zwei aufeinanderfolgenden Markierungsteile der Markierungsteilpaare des Riemens durch die Auswerte- und Regelungseinheit über die ermittelten Messabstände der zwei aufeinanderfolgenden Markierungsteile der Markierungsteilpaare des Riemens im Last- und im Leertrum durch Mittelwertsbildung der Messabstände,

q) Ermittlung der Längsdehnung im Lasttrum des Riemens durch die Auswerte- und Regelungseinheit über den ermittelten Messabstand der zwei aufeinanderfolgenden Markierungsteile der Markierungsteilpaare des Riemens im Lasttrum und den ermittelten Referenzabstand,

r) Ermittlung der Zugkraft und Zugkraftdifferenz im Lasttrum des Riemens durch die Auswerte- und Regelungseinheit über eine dem Riemen zugeordnete und in der Auswerte- und Regelungseinheit hinterlegten Federsteifigkeit sowie der Abstandsdifferenz der zwei aufeinanderfolgenden Markierungsteile der Markierungsteilpaare des Riemens im Lasttrum,

s) Erzeugen eines Signals des Markierungsteils der Riemenscheibe an einem der externen Lesegeräte,

t) Ermittlung einer Laufzeit des Markierungsteils der Riemenscheibe aus zwei Signalen durch die Auswerte- und Regelungseinheit,

u) Ermittlung der Geschwindigkeit der Riemenscheibe durch die Auswerte- und Regelungseinheit basierend auf der ermittelten Laufzeit des Markierungsteils der Riemenscheibe über den definierten Umfang der Riemenscheibe,

v) Ermittlung des Schlupfs zwischen Riemen und Riemenscheibe durch die Auswerte- und Regelungseinheit, basierend den ermittelten Geschwindigkeiten von Riemen und Riemenscheibe.

Mit anderen Worten gesagt kann jedes der externen Lesegeräte zu dem Zeitpunkt des Durchgangs eines Markierungsteils eine Veränderung eines beispielsweise von dem externen Lesegerät ausgestrahlten elektromagnetischen Feldes erfassen, das als Signal des jeweiligen Markierungsteils definiert ist. Die Zuordnung des Signals zu dem Markierungsteil kann wie eingangs beschrieben über die individuelle Identifikationskennzeichnung des jeweiligen Markierungsteils erfolgen.

Aus dem erfindungsgemäßen Verfahren ergibt sich auf besonders vorteilhafte Weise, dass mit einem Sensorsystem sowohl eine Kraft- als auch eine Geschwindigkeits- und Schlupfmessung mehrerer Komponenten eines Riementriebes, nämlich dem Riemen und der Riemenscheibe, erfolgen kann. Dieses Verfahren ist besonders kostengünstig zu realisieren, da mehrere Messungen unter gemeinsamer Nutzung von Komponenten durchgeführt werden können.

Es erweist sich gemäß einem weiteren Aspekt des erfindungsgemäßen Verfahrens als besonders vorteilhaft, dass die Auswerte- und Regelungseinheit bei Überschreiten von vorbestimmten und in der Auswerte- und Regelungseinheit hinterlegten Grenzwerten einer Geschwindigkeitsdifferenz zwischen Riemen und Riemenscheibe das Antriebsmoment oder die Antriebsdrehzahl derart regelt, dass sich die Geschwindigkeitsdifferenz innerhalb definierter Grenzwerte bewegt. Mit anderen Worten gesagt können in der Auswerte- und Regelungseinheit zulässige Grenzwerte für den Schlupf zwischen Riemen und Riemenscheibe hinterlegt sein. Die Riemengeschwindigkeit kann abhängig von der Anzahl der Markierungsteile der Markierungsteilpaare des Riemens mindestens ein Mal je Umdrehung des Riemens ermittelt und mit der Geschwindigkeit der Riemenscheibe verglichen oder ins Verhältnis gesetzt werden. Eine daraus ermittelte Geschwindigkeitsdifferenz oder ein ermittelter Schlupf kann daraufhin mit dem hinterlegten Grenzwert verglichen werden. Sollte die Geschwindigkeitsdifferenz zwischen Riemen und Riemenscheibe über den definierten Grenzwert hinausgehen, so kann die Antriebsdrehzahl oder das Antriebsmoment reduziert werden. Unter den angepassten Leistungsdaten kann eine weitere Erfassung der Geschwindigkeitswerte von Riemen und Riemenscheibe erfolgen, die erneut auf das Einhalten des definierten Grenzwertes für den Schlupf verglichen werden kann. Es können gegebenenfalls weitere Leistungsanpassungen des Antriebs folgen, bis sich der Schlupf innerhalb des definierten Grenzwertes bewegt. So kann auf vorteilhafte Weise einem erhöhten Verschleiß des Riemens in Folge hoher Temperaturen durch einen zu hohen Schlupf vorgebeugt werden.

Gemäß einem weiteren Aspekt des erfindungsgemäßen Verfahrens sichert die Auswerte- und Regelungseinheit historische Kraftverlaufsdaten des Riemens und weitere historische Sensordaten von Messeinrichtungen weiterer Maschinenelemente in einem Speicher und legt diese dort ab.

Die historischen Kraftverlaufsdaten des Riemens werden innerhalb von vorgegebenen und in dem Speicher der Auswerte- und Regelungseinheit hinterlegten Grenzwerten überwacht, wobei unter Einbezug anderweitig ermittelter historischer Sensordaten weiterer Maschinenelemente aus dem Speicher der Auswerte- und Regelungseinheit Rückschluss auf den Verschleiß von Maschinenelementen außerhalb der Vorrichtung gezogen wird. Diese Sensordaten können zur historischen Rückverfolgung dauerhaft und über einen langen Zeitraum abgespeichert werden. Darüber hinaus können diesen historischen Sensordaten die ebenfalls abgespeicherten historischen Kraftverlaufsdaten des Riemens zugeordnet werden.

Mit anderen Worten gesagt können weitere Sensordaten von Messeinrichtungen anderer zu einer Arbeitsmaschine zugehörigen Maschinenelementen in einem Speicher der Auswerte- und Regelungseinheit abgelegt werden. In der Auswerte- und Regelungseinheit können zulässige Grenzwerte für die Riemenkraft hinterlegt sein. Durch einen Abgleich der aktuell ermittelten Kräfte im Riemen mit den hinterlegten Grenzwerten können bei Überschreiten der zulässigen Grenzwerte Unregelmäßigkeiten festgestellt werden. Bei Verlassen der zulässigen Grenzwerte kann durch die Auswerte- und Regelungseinheit ein Warnsignal ausgegeben werden. Unter Einbezug anderweitig ermittelter historischer Sensordaten weiterer Maschinenelemente kann eine Korrelation zwischen der Veränderung der Riemenkräfte und der Veränderung der weiteren Sensordaten hergestellt werden. Insbesondere kann die Betrachtung der Veränderung der Kraftverlaufsdaten des Riemens in Verbindung mit weiteren Sensordaten von Messeinrichtungen anderer Maschinenelemente von großer Bedeutung sein.

Dies kann beispielhaft an einem Vorsatzgerät einer landwirtschaftlichen Maschine erläutert werden. Hierbei kann es sich um ein Schneidwerk eines Mähdreschers handeln. Vorteilhafter Weise kann durch eine Messeinrichtung des Schneidwerkes das Erntevolumen pro Zeit erfasst werden. Durch Vergleich der Kraftverlaufsdaten des Riemens, welche durch das erfindungsgemäße Verfahren ermittelt werden können, mit dem Verlauf des Erntevolumens pro Zeit des Schneidwerkes kann beispielsweise ein Verschleiß der durch den Riemen angetriebenen Messer des Schneidwerkes identifiziert werden. Steigt beispielsweise die Kraft im Riemen, während das Erntevolumen sinkt, so können die Messer stumpf oder beschädigt sein und es kann dementsprechend ein Rückschluss auf einen erforderlichen Wechsel der Messer gezogen werden.

Gemäß einem weiteren Aspekt ist die Verwendung des erfindungsgemäßen Verfahrens zur Überwachung von mit Riemen angetriebenen Einrichtungen an Vorsatzgeräten einer landwirtschaftlichen Maschine vorgesehen. So können die zuvor erläuterten Vorteile einer Sensorüberwachung auf landwirtschaftliche Maschinen übertragen werden. Insbesondere bei landwirtschaftlichen Maschinen steht eine hohe Verfügbarkeit während der Erntezeit im Fokus. Daher kommt der Vermeidung von verschleißbedingten Maschinenausfällen eine besonders große Bedeutung zu, weshalb die Überwachung von Riementrieben von besonders großer Relevanz sein kann.

Erläuterung Figuren

Anhand der Zeichnung wird im Folgenden ein Ausführungsbeispiel der Erfindung näher erläutert.

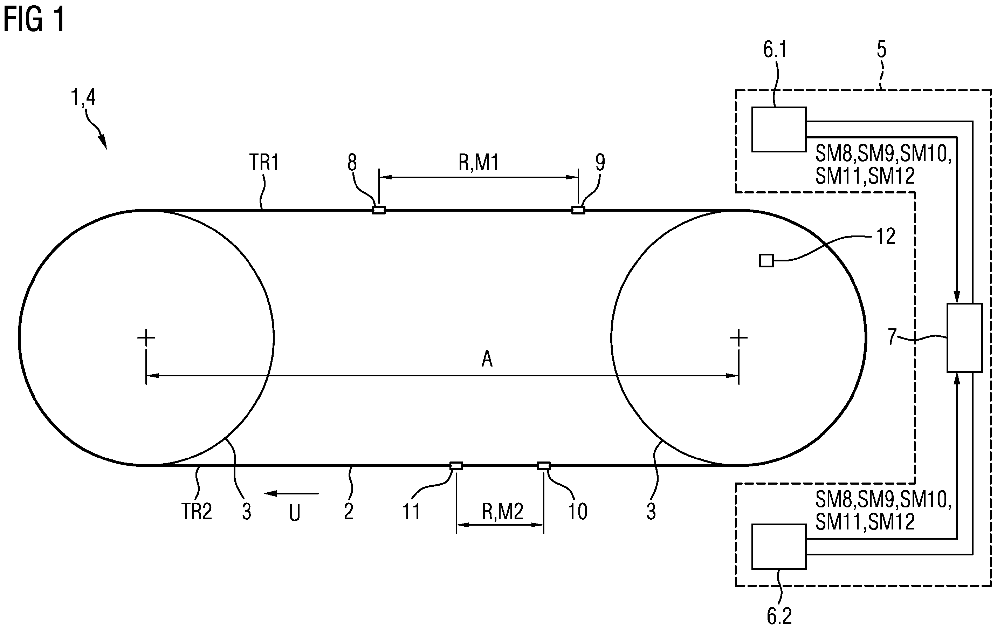

Fig. 1 zeigt eine vorteilhafte Ausgestaltung der Vorrichtung in einer schematischen Ansicht.

In der Figur 1 ist eine vorteilhafte Ausgestaltung der Vorrichtung 1 schematisch dargestellt. Die Vorrichtung 1 weist einen Riemen 2 mit vorbestimmter Längssteifigkeit und eine Antriebsvorrichtung 4 mit beispielsweise zwei, in einem Achsabstand A zueinander angeordneten Riemenscheiben 3 mit vorbestimmtem Durchmesser auf. Eine der beiden Riemenscheiben 3 ist als angetriebene Riemenscheibe mit einem Motor der Antriebsvorrichtung 4 gekoppelt. Der Riemen 2 ist in Umfangsrichtung U ringförmig umlaufend ausgebildet und umschlingt jede der beiden Riemenscheiben 3 teilweise. Der Riemen 2 ist von der Antriebsvorrichtung 4 mit den beiden Riemenscheiben 3 angetrieben, sodass der Riemen 2 in Umfangsrichtung U umläuft.

Der Riemen 2 weist ein Basismaterial und mindestens einen Festigkeitsträger auf. Das Basismaterial kann beispielsweise teilweise oder vollständig von Gummimaterial oder teilweise oder vollständig von Polyurethanmaterial gebildet sein. Andere Materialien für das Basismaterial können jedoch auch vorgesehen sein. Vorzugsweise ist das Basismaterial elektrisch isolierend ausgebildet. Der Festigkeitsträger ist als ein durchgängiger in Umfangsrichtung U schraubenförmig gewendelter Cord in das Basismaterial eingebettet. Der Festigkeitsträger dient zur Übertragung von Kräften in Umfangsrichtung U des Riemens 2. Der Festigkeitsträger kann beispielsweise von einem metallischen Draht oder von einem Kunststofffilamentstrang, wie beispielsweise einem Kunststofffaserstrang aus Polyamid gebildet sein. Die einzelnen Windungen des den Festigkeitsträger bildenden Cords in Querrichtung des Riemens 2 können verteilt zueinander angeordnet sein. Jede der Windungen erstreckt sich dabei in Umfangsrichtung U. Die Länge des Riemens 2 ist unabhängig vom Betriebszustand konstant ausgebildet.

Der Riemen 2 weist außerdem mindestens ein erstes Markierungsteil 8, ein zweites Markierungsteil 9, ein drittes Markierungsteil 10 und ein viertes Markierungsteil 11 auf. Die Markierungsteile 8, 9, 10, 11 sind in einer Ausführungsform als SAW-Sensoren ausgebildet und in das Basismaterial des Riemens eingebettet. SAW-Sensoren eignen sich insbesondere hervorragend für Anwendungen in einem Riemen 2, da sie einerseits die erforderlichen Temperaturen während der Herstellung des Riemens 2 ertragen und zur kabellosen Datenübertragung der Sensorsignale nur wenig Energie benötigen, was den Einsatz bei hohen Relativgeschwindigkeiten zwischen Sensor und dem zugehörigen externen Lesegerät 6.1, 6.2 ermöglicht. Das erste Markierungsteil 8 und das zweite Markierungsteil 9 bilden hierbei ein erstes Markierungsteilpaar, während das dritte Markierungsteil 10 und das vierte Markierungsteil 11 ein zweites Markierungsteilpaar bilden. Das erste und das zweite Markierungsteilpaar sind so angeordnet, dass sich im Ruhezustand des Riemens 2 ohne Leistungsübertragung jeweils ein Markierungsteilpaar im Lasttrum TR1 und im Leertrum TR2 befindet. In dem Zustand des Riemens 2 ohne Leistungsübertragung sind die Markierungsteile 8, 9 sowie 10, 11 der Markierungsteilpaare jeweils in einem vorbestimmten Referenzabstand R in Umfangsrichtung U hintereinander angeordnet. Der Referenzabstand R verändert sich bei Leistungsübertragung des Riemens 2 in einen ersten Messabstand M1 der Markierungsteile 8, 9 des ersten Markierungsteilpaares und in einen zweiten Messabstand M2 der Markierungsteile 10, 11 des zweiten Markierungsteilpaares.

Weiterhin weist eine der Riemenscheiben 3, welche vorzugsweise von einem Motor angetrieben ist, ebenfalls ein Markierungsteil 12 in Form eines SAW-Sensors auf.

Eine Übertragungsvorrichtung 5 umfasst zwei externe Lesegeräte 6.1, 6.2 und eine Auswerte- und Regelungseinheit 7. Jeweils eines der externen Lesegeräte 6.1, 6.2 ist im Bereich des Ein- und des Auslaufes des Riemens 2 in bzw. aus der das Markierungsteil 12 umfassenden Riemenscheibe 3 angeordnet. Die Übertragungsvorrichtung 5 ist kontaktfrei zu dem Riemen 2 und der Riemenscheibe 3 angeordnet, sodass die Markierungsteile 8, 9, 10, 11 der Markierungsteilpaare des Riemens 2 und das Markierungsteil 12 der Riemenscheibe 3 nacheinander an der Übertragungsvorrichtung 5 vorbeigeführt werden. Die Markierungsteile 8, 9, 10, 11 der Markierungsteilpaare des Riemens 2 werden durch die externen Lesegeräte 6.1, 6.2 detektiert und anhand einer individuellen Kennzeichnung jedes einzelnen Markierungsteils 8, 9, 10, 11 identifiziert und als Signal SM8, SM9, SM10, SM11 durch die externen Lesegeräte 6.1, 6.2 an die Auswerte- und Regelungseinheit 7 ausgegeben.

Ebenso wird während des Umlaufs der Riemenscheibe 3 das Markierungsteil 12 durch eines der externen Lesegeräte 6.1, 6.2 detektiert und identifiziert und als Signal SM12 an die Auswerte- und Regelungseinheit 7 ausgegeben.

Dabei ist jedes der externen Lesegeräte 6.1, 6.2 dazu konfiguriert, die Signale SM8, SM9, SM10, SM11, SM12 zu erfassen.

Die Auswerte- und Regelungseinheit 7 ist dazu konfiguriert, aus jeweils zwei Signalen SM8, SM9, SM10, SM11, SM12 jeweils eine Laufzeit zu ermitteln.

Weiterhin ist die Auswerte- und Regelungseinheit 7 dazu konfiguriert, eine mittlere Geschwindigkeit V2 des Riemens 2 basierend auf der ermittelten Laufzeit TR eines der Markierungsteile 8, 9, 10, 11 der Markierungsteilpaare über die Umfangslänge LR über einen Umlauf des Riemens 2 und eine Geschwindigkeit V3 der Riemenscheibe 3 basierend auf der ermittelten Laufzeit TS des Markierungsteils 12 über den definierten und in der Auswerte- und Regelungseinheit 7 hinterlegten Umfang LS der Riemenscheibe 3 zu ermitteln.

$$V2 = \frac{LR}{TR}$$

$$V3 = \frac{LS}{TS}$$

Über die Ermittlung der Differenz der Laufzeiten dTR der zwei aufeinander folgenden Markierungsteile 8, 9 des Markierungsteilpaares im Lasttrum TR1 sowie der Markierungsteile 10, 11 des Markierungsteilpaares im Leertrum TR2 des Riemens 2 lassen sich zusammen mit der mittleren Riemengeschwindigkeit V2 ein erster Messabstand M1 der Markierungsteile 8, 9 des ersten Markierungsteilpaares und ein zweiter Messabstand M2 der Markierungsteile 10, 11 des zweiten Markierungsteilpaares ermitteln. Die dem Lasttrum TR1 zugeordnete Differenz der Laufzeiten dTR der Markierungsteile 8, 9 des ersten Markierungsteilpaares und dem Leertrum TR2 zugeordnete Differenz der Laufzeiten dTR der Markierungsteile 10, 11 des zweiten Markierungsteilpaares erfolgt über jeweils das dem Lasttrum TR1 zugeordnete externe Lesegerät 6.1, welches die Signale SM8, SM9 an die Auswerte- und Regelungseinheit 7 ausgibt und das dem Leetrum TR2 zugeordnete externe Lesegerät 6.2, welches die Signale SM10, SM11 an die Auswerte- und Regelungseinheit 7 ausgibt.

$$M = V2 * dTR$$

Aus den ermittelten Messabständen M1 und M2 wird durch die Auswerte- und Regelungseinheit 7 eine Abstandsdifferenz dM der zwei aufeinander folgenden Markierungsteile 8,9 des ersten Markierungsteilpaares im Lasttrum TR1 und der zwei aufeinander folgenden Markierungsteile 10, 11 des zweiten Markierungsteilpaares im Leertrum TR2 zueinander ermittelt. Durch Mittelwertsbildung der Messabstände M1 und M2 wird durch die Auswerte- und Regelungseinheit 7 der Referenzabstand R der zwei aufeinanderfolgenden Markierungsteile 8,9 des ersten Markierungsteilpaares im Lasttrum TR1 und der zwei aufeinander folgenden Markierungsteile 10, 11 des zweiten Markierungsteilpaares im Leertrum TR2 ermittelt.

$$dM = M1 - M2$$

$$R = \frac{dM}{2}$$

Basierend auf dem zuvor ermittelten Messabstand M1 und dem Referenzabstand R wird in einem nächsten Verfahrensschritt die Längsdehnung ε des Riemens 2 im Lasttrum TR1 durch die Auswerte- und Regelungseinheit 7 ermittelt.

$$\varepsilon = M1 - R$$

In einem weiteren Verfahrensschritt wird durch die Auswerte- und Regelungseinheit 7 eine Zugkraft Fz und eine Zugkraftdifferenz dFz ermittelt.

Die Zugkraftdifferenz dFz entspricht hierbei dem Kraftanteil, der, durch die über die Antriebsriemenscheibe 3 eingeleitete Antriebsleistung in den Riementrieb, zu der statischen Vorspannkraft hinzuaddiert wird. Hierzu ist in der Auswerte- und Regelungseinheit 7 eine dem jeweiligen Riemen individuell zugeordnete Federsteifigkeit D hinterlegt. Die Federsteifigkeit D ist abhängig von der Riemenspezifikation und muss beim Einrichten der Maschine einmalig in der Auswerte- und Regelungseinheit 7 hinterlegt werden. Die Information zur Federsteifigkeit kann beispielsweise auch über einen zu scannenden Barcode am Riemen zur Verfügung gestellt werden. Weiterhin ist zur Ermittlung der Zugkraft Fz der Messabstand M1, bzw. zur Ermittlung der Zugkraftdifferenz dFz die Abstandsdifferenz dM der Berechnung zu Grunde zu legen.

$$Fz = D * M1$$

$$dFz = D * \varepsilon$$

Weiterhin ist die Auswerte- und Regelungseinheit 7 dazu bestimmt, einen Schlupf V4 zwischen Riemen 2 und Riemenscheibe 3, basierend auf den ermittelten Geschwindigkeiten V2, V3 des Riemens 2 und Riemenscheibe 3 zu ermitteln.

$$V4 = \frac{V3}{V2} - 1$$

Bezugszeichenliste

| 1 | Vorrichtung |
|---|---|
| 2 | Riemen |
| 3 | Riemenscheibe |
| 4 | Antriebsvorrichtung |
| 5 | Übertragungsvorrichtung |
| 6.1 6.2 | erstes externes Lesegerät zweites externes Lesegerät |

| 7 | Auswerte- und Regelungseinheit |
|---|---|
| 8 | Erstes Markierungsteil des Riemens |
| 9 | Zweites Markierungsteil des Riemens |
| 10 | Drittes Markierungsteil des Riemens |
| 11 | Viertes Markierungsteil des Riemens |
| 12 | Markierungsteil der Riemenscheibe |
| A | Achsabstand der Riemenscheiben |
| D | Federsteifigkeit |
| ε | Längsdehnung des Riemens |
| F | freie Trumlänge |
| Fz | Zugkraft |
| dFz | Zugkraftdifferenz |
| $L_R$ | Umfangslänge des Riemens |
| Ls | Umfangslänge der Riemenscheibe |
| M1 | Messabstand des ersten Markierungsteilpaares |
| M2 | Messabstand des zweiten Markierungsteilpaares |
| dM | Abstandsdifferenz |
| R | Referenzabstand |
| SM8 | Signal des Lesegerätes des ersten Markierungsteils des Riemens |
| SM9 | Signal des Lesegerätes des zweiten Markierungsteils des Riemens |
| SM10 | Signal des Lesegerätes des dritten Markierungsteils des Riemens |
| SM11 | Signal des Lesegerätes des vierten Markierungsteils des Riemens |
| SM12 | Signal des Lesegerätes des Markierungsteils der Riemenscheibe |
| TR | Laufzeit eines Markierungsteils des Riemens über die Umfangslänge über einen Umlauf des Riemens |
| dTR | Differenz der Laufzeiten zweier aufeinander folgender Markierungsteile eines Markierungsteilpaares |
| TS | Laufzeit eines Markierungsteils der Riemenscheibe über die Umfangslänge der Riemenscheibe |
| TR1 | Lasttrum |
| TR2 | Leertrum |
| U | Umfangsrichtung |
| V2 | mittlere Riemengeschwindigkeit |
| V3 | Geschwindigkeit der Riemenscheibe |
| V4 | Schlupf zwischen Riemen und Riemenscheibe |

**Patentansprüche**

1. Vorrichtung (1) zur Ermittlung einer Längsdehnung (ε) und einer mittleren Geschwindigkeit (V2) eines Riemens (2), sowie zur Ermittlung einer Geschwindigkeit (V3) mindestens einer Riemenscheibe (3), umfassend

   - den Riemen (2) mit vorbestimmter Längssteifigkeit,
   - wobei die Länge des Riemens (2) unabhängig vom Betriebszustand konstant ausgebildet ist,
   - wobei der Riemen (2) mindestens ein erstes Markierungsteil (8), ein zweites Markierungsteil (9), ein drittes Markierungsteil (10) und ein viertes Markierungsteil (11) aufweist,
   - wobei das erste und das zweite Markierungsteil (8, 9) ein erstes Markierungsteilpaar bilden und das dritte und vierte Markierungsteil (10, 11) ein zweites Markierungsteilpaar bilden,
   - eine Antriebsvorrichtung (4) mit mindestens zwei, in einem Achsabstand (A) zueinander angeordneten und durch den Riemen (2) zumindest teilweise umschlungenen Riemenscheiben (3) mit vorbestimmtem Durchmesser,
   - eine Übertragungsvorrichtung (5), umfassend mindestens zwei externe Lesegeräte (6.1, 6.2) und eine Auswerte- und Regelungseinheit (7), die geeignet ist, die Drehzahl und / oder das Drehmoment der Antriebsvorrichtung (4) zu regeln,
   - wobei während des Riemenumlaufs durch jedes Markierungsteil (8, 9, oder 10, 11) an den externen Lesegeräten (6.1, 6.2) identifizierbare Signale (SM8, SM9, SM10, SM11) erzeugbar und ,
   - an die Auswerte- und Regelungseinheit (7) ausgebbar sind,
   - wobei der Riemen (2) in einer Umfangsrichtung (U) ringförmig umlaufend ausgebildet ist und von der Antriebsvorrichtung in Umfangsrichtung (U) angetrieben ist,

- wobei der Riemen (2) ein lastübertragendes Lasttrum (TR1) und ein dem Lasttrum gegenüberliegend angeordnetes Leertrum (TR2) aufweist,

- wobei die Markierungsteile (8, 9, oder 10, 11) der Markierungsteilpaare des Riemens (2) in einem Zustand ohne Leistungsübertragung jeweils in einem vorbestimmten Referenzabstand (R) in Umfangsrichtung (U) hintereinander angeordnet sind,

- wobei der Referenzabstand (R) der Markierungsteile (8, 9) des ersten Markierungsteilpaares bei einer Leistungsübertragung des Riemens (2) ausgebildet ist, sich in einen ersten Messabstand (M1) zu verändern,

- wobei der Referenzabstand (R) der Markierungsteile (10, 11) des zweiten Markierungsteilpaares bei einer Leistungsübertragung des Riemens (2) ausgebildet ist, sich in einen zweiten Messabstand (M2) zu verändern,

- wobei mindestens eine der Riemenscheiben (3) mindestens ein Markierungsteil (12) aufweist,

- wobei während des Umlaufs der Riemenscheibe (3) das Markierungsteil (12) der Riemenscheibe (3) ausgebildet ist, an einem der externen Lesegeräte (6.1, 6.2) ein identifizierbares Signal (SM12) zu erzeugen und an die Auswerte- und Regelungseinheit (7) auszugeben,

- wobei die Übertragungsvorrichtung (5) kontaktfrei zu dem Riemen (2) derart angeordnet ist, dass die Markierungsteile (8, 9, 10, 11, 12) der Markierungsteilpaare des Riemens (2) und der Riemenscheibe (3) nacheinander an der Übertragungsvorrichtung (5) vorbeiführbar sind,

- wobei die Auswerte- und Regelungseinheit (7) konfiguriert ist, aus jeweils zwei Signalen (SM8, SM9, SM10, SM11, SM12) jeweils eine Laufzeit zu ermitteln,

- wobei die Auswerte- und Regelungseinheit (7) konfiguriert ist, eine mittlere Geschwindigkeit (V2) des Riemens (2) basierend auf der ermittelten Laufzeit (TR) eines der Markierungsteile (8, 9, sowie 10, 11) der Markierungsteilpaare über die Umfangslänge (LR) über einen Umlauf des Riemens (2) und eine Geschwindigkeit (V3) der Riemenscheibe (3) basierend auf der ermittelten Laufzeit (TS) des Markierungsteils (12) der Riemenscheibe (3) zu ermitteln,

**dadurch gekennzeichnet, dass**
in einem Zustand des Riemens (2) ohne Leistungsübertragung jeweils im Last- und Leertrum (TR1, TR2) über den Umfang (U) des Riemens (2) mindestens ein aus den Markierungsteilen (8, 9, oder 10, 11) gebildetes Markierungsteilpaar angeordnet ist, wobei die Auswerte- und Regelungseinheit (7) dazu konfiguriert ist,

- eine Längsdehnung des Riemens basierend auf der mittleren Riemengeschwindigkeit (V2), der Differenz der Laufzeiten (dTR) der zwei aufeinanderfolgenden Markierungsteile (8, 9, oder 10, 11) der Markierungsteilpaare des Riemens (2) sowohl im Lasttrum (TR1) als auch im Leertrum (TR2), sowie dem daraus ermittelten Messabstand (M1, M2) der Markierungsteile (8, 9, oder 10, 11) der Markierungsteilpaare sowohl im Lasttrum (TR1) als auch im Leertrum (TR2) zueinander, sowie dem Referenzabstand (R) als Mittelwert aus den ermittelten Messabständen (M1, M2) zu ermitteln,

- eine Zugkraft (Fz) und Zugkraftdifferenz (dFz) im Lasttrum (TR1) des Riemens (2) durch die Auswerte- und Regelungseinheit (7) über eine dem Riemen (2) zugeordnete und in der Auswerte- und Regelungseinheit (7) hinterlegten Federsteifigkeit (D) sowie einer Abstandsdifferenz (dM) der Markierungsteile (8, 9, oder 10, 11) der Markierungsteilpaare des Riemens (2) im Lasttrum (TR1) zu ermitteln,

- als auch dazu konfiguriert ist, einen Schlupf (V4) zwischen Riemen (2) und Riemenscheibe (3) basierend auf dem Verhältnis der von Riemen (2) und Riemenscheibe (3) ermittelten mittleren Geschwindigkeiten (V2, V3) zu ermitteln.

2. Vorrichtung (1) nach Anspruch 1,
**dadurch gekennzeichnet, dass**
die Markierungsteile (8, 9, 10, 11, 12) als akustische Oberflächenwellensensoren ausgebildet sind.

3. Vorrichtung (1) nach Anspruch 1,
**dadurch gekennzeichnet, dass**
die Markierungsteile (8, 9, 10, 11, 12) als RFID-Transponder ausgebildet sind.

4. Vorrichtung nach Anspruch 1,
**dadurch gekennzeichnet, dass**
die Markierungsteile (8, 9, 10, 11, 12) als ferromagnetische Markierungsteile ausgebildet sind.

5. Vorrichtung (1) nach einem der vorhergehenden Ansprüche,
**dadurch gekennzeichnet, dass**
die angetriebene Riemenscheibe mindestens ein Markierungsteil (12) aufweist.

6. Vorrichtung (1) nach einem der vorhergehenden Ansprüche,
**dadurch gekennzeichnet, dass**
jeweils eines der externen Lesegeräte (6.1, 6.2) im Bereich des Einlaufs und des Auslaufs des Riemens (2) in/aus die/der Riemenscheibe (3) angeordnet ist.

7. Vorrichtung (1) nach einem der vorhergehenden Ansprüche,
**dadurch gekennzeichnet, dass**
die Auswerte- und Regelungseinheit (7) bei Überschreiten von vorbestimmten und in der Auswerte- und Regelungseinheit (7) hinterlegten Grenzwerten eines Schlupfes (V4) zwischen Riemen (2) und Riemenscheibe (3) dazu konfiguriert ist, das Antriebsmoment oder die Antriebsdrehzahl derart zu regeln, dass sich der Schlupf (V4) innerhalb definierter Grenzwerte bewegt.

8. Vorrichtung (1) nach einem der vorhergehenden Ansprüche,
**dadurch gekennzeichnet, dass**
Auswerte- und Regelungseinheit (7) mit weiteren Messeinrichtungen von Maschinenelementen gekoppelt ist und einen Speicher

- zur Sicherung historischer Sensordaten und
- zur Sicherung historischer Kraftverlaufsdaten des Riemens (2) umfasst, wobei die Auswerte- und Regelungseinheit (7) ausgebildet ist,
- die historischen Kraftverlaufsdaten des Riemens (2) innerhalb von vorgegebenen und in dem Speicher der Auswerte- und Regelungseinheit (7) hinterlegten Grenzwerten zu überwachen
- und unter Einbezug der historischen Sensordaten weiterer Maschinenelemente aus dem Speicher der Auswerte- und Regelungseinheit (7) Rückschluss auf den Verschleiß von Maschinenelementen außerhalb der Vorrichtung (1) zu ziehen.

9. Vorsatzgerät einer landwirtschaftlichen Maschine mit wenigstens einer Vorrichtung (1) nach einem der vorhergehenden Ansprüche zur Überwachung von mit Riemen (2) angetriebenen Einrichtungen.

10. Verfahren zur Ermittlung einer Längsdehnung (ε) und einer mittleren Geschwindigkeit (V2) eines Riemens (2), sowie zur Ermittlung der Geschwindigkeit (V3) mindestens einer Riemenscheibe (3), umfassend

- den Riemen (2) mit vorbestimmter Längssteifigkeit,
- wobei die Länge (LR) des Riemens (2) unabhängig vom Betriebszustand konstant ist,
- wobei der Riemen (2) mindestens ein erstes Markierungsteil (8), ein zweites Markierungsteil (9), ein drittes Markierungsteil (10) und ein viertes Markierungsteil (11) aufweist,
- wobei das erste und das zweite Markierungsteil (8, 9) ein erstes Markierungsteilpaar und das dritte und vierte Markierungsteil (10, 11) ein zweites Markierungsteilpaar bilden,
- eine Antriebsvorrichtung (4) mit mindestens zwei, in einem Achsabstand (A) zueinander angeordneten und durch den Riemen (2) zumindest teilweise umschlungenen Riemenscheiben (3) mit vorbestimmtem Durchmesser,
- eine Übertragungsvorrichtung (5), umfassend mindestens zwei externe Lesegeräte (6.1, 6.2) und eine Auswerte- und Regelungseinheit (7), die die Drehzahl und / oder das Drehmoment der Antriebsvorrichtung (4) regelt,
- wobei während des Riemenumlaufs durch jedes Markierungsteil (8, 9, oder 10, 11) an den externen Lesegeräten (6.1, 6.2) identifizierbare Signale (SM8, SM9, SM10, SM11) erzeugt werden und
- an die Auswerte- und Regelungseinheit (7) ausgegeben werden, wobei der Riemen (2) in einer Umfangsrichtung (U) ringförmig umläuft und von der Antriebsvorrichtung (4) in Umfangsrichtung (U) angetrieben ist, wobei der Riemen (2) ein Lasttrum (TR1), und ein dem Lasttrum gegenüberliegend angeordnetes Leertrum (TR2) aufweist,
- wobei die Markierungsteile (8, 9, sowie 10, 11) der Markierungsteilpaare des Riemens (2) in einem Zustand ohne Leistungsübertragung jeweils in einem vorbestimmten Referenzabstand (R) in einem unbelasteten Zustand des Riemens in Umfangsrichtung (U) hintereinander angeordnet sind,
- wobei sich der Referenzabstand (R) der Markierungsteile (8, 9) des ersten Markierungsteilpaares bei einer Leistungsübertragung des Riemens (2) in einen ersten Messabstand (M1) verändert
- wobei sich der Referenzabstand (R) der Markierungsteile (10, 11) des zweiten Markierungsteilpaares bei einer Leistungsübertragung des Riemens (2) in einen zweiten Messabstand (M2) verändert wobei mindestens eine der Riemenscheiben (3) mindestens ein Markierungsteil (12) aufweist, wobei während des Umlaufs der Riemenscheibe (3) das Markierungsteil (12) der Riemenscheibe an einem der externen Lesegeräte (6.1, 6.2) ein identifizierbares Signal erzeugt und an die Auswerte- und Regelungseinheit (7) ausgibt,
- wobei die Übertragungsvorrichtung (5) kontaktfrei zu dem Riemen (2) derart angeordnet ist, sodass die Markierungsteile (8, 9, 10, 11, 12) der Markierungsteilpaare des Riemens (2) und der Riemenscheibe (3) nacheinander an der Übertragungsvorrichtung (5) vorbeigeführt werden,
- wobei die Auswerte- und Regelungseinheit (7) aus jeweils zwei Signalen (SM8, SM9, SM10, SM11, SM12) eine Laufzeit (TR, TS) ermittelt,
- wobei die Auswerte- und Regelungseinheit (7) aus den Laufzeiten (TR, TS) eine mittlere Geschwindigkeit (V2, V3) des Riemens (2) und der Riemenscheibe (3) ermittelt,

**gekennzeichnet durch die folgenden Verfahrensschritte:**

a) Erzeugen eines Signals (SM8) des ersten Markierungsteils (8) des Riemens (2) an dem ersten externen Lesegerät (6.1),
b) Erzeugen eines Signals (SM9) des zweiten Markierungsteils (9) des Riemens (2) an dem ersten externen Lesegerät (6.1),
c) Erzeugen eines Signals (SM10) des dritten Markierungsteils (10) des Riemens (2) an dem ersten externen Lesegerät (6.1),
d) Erzeugen eines Signals (SM11) des vierten Markierungsteils (11) des Riemens (2) an dem ersten externen Lesegerät (6.1),
e) Erzeugen eines Signals (SM8) des ersten Markierungsteils (8) des Riemens (2) an dem zweiten externen Lesegerät (6.2),
f) Erzeugen eines Signals (SM9) des zweiten Markierungsteils (9) des Riemens (2) an dem zweiten externen Lesegerät (6.2),
g) Erzeugen eines Signals (SM10) des dritten Markierungsteils (10) des Riemens (2) an dem zweiten externen Lesegerät (6.2),
h) Erzeugen eines Signals (SM11) des vierten Markierungsteils (11) des Riemens (2) an dem zweiten externen Lesegerät (6.2),
i) Ermittlung einer Laufzeit aus jeweils zwei Signalen (SM8, SM9, SM10, SM11) durch die Auswerte- und Regelungseinheit (7),
j) Ermittlung der mittleren Geschwindigkeit (V2) des Riemens (2) durch die Auswerte- und Regelungseinheit (7) basierend auf der ermittelten Laufzeit eines der Markierungsteile (8, 9, oder 10, 11) der Markierungsteilpaare über die Umfangslänge über einen Umlauf des Riemens (2),
k) Ermittlung der Differenz der Laufzeiten (dTR) der zwei aufeinanderfolgenden Markierungsteile (8, 9, oder 10, 11) der Markierungsteilpaare des Riemens (2) an dem dem Lasttrum (TR1) zugeordneten externen Lesegerät (6.1) durch die Auswerte- und Regelungseinheit (7),
l) Ermittlung des Messabstandes (M1, M2) der zwei aufeinanderfolgenden Markierungsteile (8,9, oder 10,11) der Markierungsteilpaare im Lasttrum (TR1) über die ermittelte mittlere Geschwindigkeit (V2) des Riemens (2) und die ermittelte Differenz der Laufzeiten (dTR) der zwei aufeinanderfolgenden Markierungsteile (8, 9, sowie 10, 11) der Markierungsteilpaare des Riemens (2),

m) Ermittlung der Differenz der Laufzeiten (dTR) der zwei aufeinanderfolgenden Markierungsteile (8, 9, oder 10, 11) der Markierungsteilpaare des Riemens (2) an dem dem Leertrum (TR2) zugeordneten externen Lesegerät (6.2) durch die Auswerte- und Regelungseinheit (7),
n) Ermittlung des Messabstandes (M1, M2) der zwei aufeinanderfolgenden Markierungsteile (8,9, oder 10,11) der Markierungsteilpaare im Leertrum (TR2) über die ermittelte mittlere Geschwindigkeit (V2) des Riemens (2) und die ermittelte Differenz der Laufzeiten (dTR) der zwei aufeinanderfolgenden Markierungsteile (8, 9, sowie 10, 11) der Markierungsteilpaare des Riemens (2),
o) Ermittlung der Abstandsdifferenz (dM) der zwei aufeinanderfolgenden Markierungsteile (8, 9, sowie 10, 11) der Markierungsteilpaare des Riemens (2) im Lasttrum (TR1) und im Leertrum (TR2) zueinander durch die Auswerte- und Regelungseinheit (7),
p) Ermittlung des Referenzabstandes (R) der zwei aufeinanderfolgenden Markierungsteile (8, 9, oder 10, 11) der Markierungsteilpaare des Riemens (2) durch die Auswerte- und Regelungseinheit (7) über die ermittelten Messabstände (M1, M2) der zwei aufeinanderfolgenden Markierungsteile (8, 9, oder 10, 11) der Markierungsteilpaare des Riemens (2) im Last- (TR1) und im Leertrum (TR2) durch Mittelwertsbildung der Messabstände (M1, M2),
q) Ermittlung der Längsdehnung ($\varepsilon$) im Lasttrum (TR1) des Riemens (2) durch die Auswerte- und Regelungseinheit (7) über den ermittelten Messabstand (M1, M2) der zwei aufeinanderfolgenden Markierungsteile (8, 9, oder 10, 11) der Markierungsteilpaare des Riemens (2) im Lasttrum (TR1) und den ermittelten Referenzabstand (R),
r) Ermittlung der Zugkraft (Fz) und Zugkraftdifferenz (dFz) im Lasttrum (TR1) des Riemens (2) durch die Auswerte- und Regelungseinheit (7) über eine dem Riemen (2) zugeordnete und in der Auswerte- und Regelungseinheit (7) hinterlegten Federsteifigkeit (D) sowie der Abstandsdifferenz (dM) der zwei aufeinanderfolgenden Markierungsteile (8, 9, oder 10, 11) der Markierungsteilpaare des Riemens (2) im Lasttrum (TR1),
s) Erzeugen eines Signals (SM12) des Markierungsteils (12) der Riemenscheibe (3) an einem der externen Lesegeräte (6.1, 6.2),
t) Ermittlung einer Laufzeit (TS) des Markierungsteils (12) der Riemenscheibe (3) aus zwei Signalen (SM12) durch die Auswerte- und Regelungseinheit (7),
u) Ermittlung der Geschwindigkeit (V3) der Riemenscheibe (3) durch die Auswerte- und Regelungseinheit (7) basierend auf der ermittelten Laufzeit (TS) des Markierungsteils (12) der Riemenscheibe (3) über den definierten Umfang der Riemenscheibe (3),

v) Ermittlung des Schlupfs (V4) zwischen Riemen (2) und Riemenscheibe (3) durch die Auswerte- und Regelungseinheit (7), basierend den ermittelten Geschwindigkeiten (V2, V3) von Riemen (2) und Riemenscheibe (3).

11. Verfahren nach Anspruch 10,
**dadurch gekennzeichnet, dass**
die Auswerte- und Regelungseinheit (7) bei Überschreiten von vorbestimmten und in der Auswerte- und Regelungseinheit (7) hinterlegten Grenzwerten eines Schlupfes (V4) zwischen Riemen (2) und Riemenscheibe (3) das Antriebsmoment oder der Antriebsdrehzahl reduziert, sodass sich der Schlupf (V4) innerhalb definierter Grenzwerte bewegt.

12. Verfahren nach Anspruch 10 oder 11,

**dadurch gekennzeichnet, dass** die Auswerte- und Regelungseinheit (7) in einem Speicher historische Kraftverlaufsdaten des Riemens (2) und weitere historische Sensordaten von Messeinrichtungen weiterer Maschinenelemente ablegt und sichert
und die historischen Kraftverlaufsdaten des Riemens (2) innerhalb von vorgegebenen und in dem Speicher der Auswerte- und Regelungseinheit (7) hinterlegten Grenzwerten überwacht, wobei unter Einbezug anderweitig ermittelter historischer Sensordaten weiterer Maschinenelemente aus dem Speicher der Auswerte- und Regelungseinheit (7) Rückschluss auf den Verschleiß von Maschinenelementen außerhalb der Vorrichtung (1) gezogen wird.

13. Verwendung des Verfahrens nach einem der Ansprüche 10 bis 12 zur Überwachung von mit Riemen angetriebenen Einrichtungen an Vorsatzgeräten einer landwirtschaftlichen Maschine.

**Claims**

1. Device (1) for ascertaining a longitudinal extension ($\varepsilon$) and an average speed (V2) of a belt (2) and for ascertaining a speed (V3) of at least one belt pulley (3), comprising

    - the belt (2) with a predetermined longitudinal stiffness,
    - wherein the length of the belt (2) is constant irrespective of the operating state,
    - wherein the belt (2) has at least a first marking part (8), a second marking part (9), a third marking part (10) and a fourth marking part (11),
- wherein the first and the second marking part (8, 9) form a first marking part pair and the third and fourth marking parts (10, 11) form a second marking part pair,
- a drive device (4) having at least two belt pulleys (3) of predetermined diameter which are arranged with an axis spacing (A) from each other and around which the belt (2) is at least partially looped,
- a transmission device (5) comprising at least two external readers (6.1, 6.2) and an evaluation and control unit (7) which is suitable for controlling the rotation speed and/or the torque of the drive device (4),
- wherein, as the belt revolves, signals (SM8, SM9, SM10, SM11) identifiable at the external readers (6.1, 6.2) can be generated by each marking part (8, 9 or 10, 11) and
- can be output to the evaluation and control unit (7),
- wherein the belt (2) is designed to revolve in a circumferential direction (U) in the form of a ring and is driven by the drive device in the circumferential direction (U),
- wherein the belt (2) has a load-transmitting load strand (TR1) and an idle strand (TR2) arranged opposite to the load strand,
- wherein, in a state without power transmission, the marking parts (8, 9 or 10, 11) of the marking part pairs of the belt (2) are each arranged one behind the other in the circumferential direction (U) with a predetermined reference spacing (R),
- wherein the reference spacing (R) of the marking parts (8, 9) of the first marking part pair is designed to change into a first measurement spacing (M1) when power is transmitted by the belt (2),
- wherein the reference spacing (R) of the marking parts (10, 11) of the second marking part pair is designed to change into a second measurement spacing (M2) when power is transmitted by the belt (2),
- wherein at least one of the belt pulleys (3) has at least one marking part (12),
- wherein, as the belt pulley (3) rotates, the marking part (12) of the belt pulley (3) is designed to generate an identifiable signal (SM12) at one of the external readers (6.1, 6.2) and to output it to the evaluation and control unit (7),
- wherein the transmission device (5) is arranged without contact with the belt (2) in such a way that the marking parts (8, 9, 10, 11, 12) of the marking part pairs of the belt (2) and the belt pulley (3) can be guided past the transmission device (5) in succession,
- wherein the evaluation and control unit (7) is configured to ascertain a respective running time from in each case two signals (SM8, SM9, SM10, SM11, SM12),
- wherein the evaluation and control unit (7) is configured to ascertain an average speed (V2) of the belt (2) based on the ascertained running time (TR) of one of the marking parts (8, 9 and 10, 11) of the marking part pairs over the circumferential length (LR) over one revolution of the belt (2) and a speed (V3) of the belt pulley (3) based on the ascertained running time (TS) of the marking part (12) of the belt pulley (3),

**characterized in that**
in a state of the belt (2) without power transmission, at least one marking part pair formed from the marking parts (8, 9 or 10, 11) is arranged respectively in the load strand and the idle strand (TR1, TR2) over the circumference (U) of the belt (2), wherein the evaluation and control unit (7) is configured

- to ascertain a longitudinal extension of the belt based on the average belt speed (V2), the difference between the running times (dTR) of the two consecutive marking parts (8, 9 or 10, 11) of the marking part pairs of the belt (2) both in the load strand (TR1) and in the idle strand (TR2), and the measurement spacing (M1, M2) ascertained therefrom of the marking parts (8, 9 or 10, 11) of the marking part pairs from each other both in the load strand (TR1) and in the idle strand (TR2), and the reference spacing (R) as an average value from the ascertained measurement spacings (M1, M2),
- to ascertain a tensile force (Fz) and difference in tensile force (dFz) in the load strand (TR1) of the belt (2) using the evaluation and control unit (7) via a spring stiffness (D) assigned to the belt (2) and stored in the evaluation and control unit (7) and a difference in spacing (dM) of the marking parts (8, 9 or 10, 11) of the marking part pairs of the belt (2) in the load strand (TR1),
- and is also configured to ascertain slip (V4) between the belt (2) and the belt pulley (3) based on the ratio of the average speeds (V2, V3) ascertained from the belt (2) and the belt pulley (3).

2. Device (1) according to Claim 1,
**characterized in that**
the marking parts (8, 9, 10, 11, 12) are in the form of acoustic surface wave sensors.

3. Device (1) according to Claim 1,
**characterized in that**
the marking parts (8, 9, 10, 11, 12) are in the form of RFID transponders.

4. Device according to Claim 1,

**characterized in that**
the marking parts (8, 9, 10, 11, 12) are in the form of ferromagnetic marking parts.

5. Device (1) according to one of the preceding claims, **characterized in that**
the driven belt pulley has at least one marking part (12).

6. Device (1) according to one of the preceding claims, **characterized in that**
one of the external readers (6.1, 6.2) is arranged in the region of the inlet and one in the region of the outlet of the belt (2) into/out of the belt pulley (3).

7. Device (1) according to one of the preceding claims, **characterized in that**
when predetermined limit values for slip (V4) between the belt (2) and the belt pulley (3) stored in the evaluation and control unit (7) are exceeded, the evaluation and control unit (7) is configured to control the drive torque or the drive speed in such a way that the slip (V4) moves within defined limit values.

8. Device (1) according to one of the preceding claims, **characterized in that**
the evaluation and control unit (7) is coupled to further measuring devices of machine elements and comprises a memory

- for backing up historical sensor data and
- for backing up historical force profile data relating to the belt (2), wherein the evaluation and control unit (7) is designed
- to monitor the historical force profile data relating to the belt (2) within prespecified limit values stored in the memory of the evaluation and control unit (7)
- and, taking into account the historical sensor data relating to further machine elements from the memory of the evaluation and control unit (7), to draw a conclusion about the wear of machine elements outside the device (1).

9. Attachment of an agricultural machine having at least one device (1) according to one of the preceding claims for monitoring devices driven by belts (2).

10. Method for ascertaining a longitudinal extension ($\varepsilon$) and an average speed (V2) of a belt (2) and for ascertaining the speed (V3) of at least one belt pulley (3), comprising

- the belt (2) with a predetermined longitudinal stiffness,
- wherein the length (LR) of the belt (2) is constant irrespective of the operating state,
- wherein the belt (2) has at least a first marking part (8), a second marking part (9), a third marking part (10) and a fourth marking part (11),

- wherein the first and the second marking part (8, 9) form a first marking part pair and the third and fourth marking parts (10, 11) form a second marking part pair,

- a drive device (4) having at least two belt pulleys (3) of predetermined diameter which are arranged with an axis spacing (A) from each other and around which the belt (2) is at least partially looped,

- a transmission device (5) comprising at least two external readers (6.1, 6.2) and an evaluation and control unit (7) which controls the rotation speed and/or the torque of the drive device (4),

- wherein, as the belt revolves, signals (SM8, SM9, SM10, SM11) identifiable at the external readers (6.1, 6.2) are generated by each marking part (8, 9 or 10, 11) and

- are output to the evaluation and control unit (7), wherein the belt (2) revolves in a circumferential direction (U) in the form of a ring and is driven by the drive device (4) in the circumferential direction (U), wherein the belt (2) has a load strand (TR1)

and an idle strand (TR2) arranged opposite to the load strand,

- wherein, in a state without power transmission, the marking parts (8, 9 and 10, 11) of the marking part pairs of the belt (2) are each arranged one behind the other in the circumferential direction (U) with a predetermined reference spacing (R) in a non-loaded state of the belt,

- wherein the reference spacing (R) of the marking parts (8, 9) of the first marking part pair changes into a first measurement spacing (M1) when power is transmitted by the belt (2),

- wherein the reference spacing (R) of the marking parts (10, 11) of the second marking part pair changes into a second measurement spacing (M2) when power is transmitted by the belt (2), wherein at least one of the belt pulleys (3) has at least one marking part (12), wherein, as the belt pulley (3) rotates, the marking part (12) of the belt pulley generates an identifiable signal at one of the external readers (6.1, 6.2) and outputs it to the evaluation and control unit (7),

- wherein the transmission device (5) is arranged without contact with the belt (2) in such a way that the marking parts (8, 9, 10, 11, 12) of the marking part pairs of the belt (2) and the belt pulley (3) are guided past the transmission device (5) in succession,

- wherein the evaluation and control unit (7) ascertains a running time (TR, TS) from in each case two signals (SM8, SM9, SM10, SM11, SM12),

- wherein the evaluation and control unit (7) ascertains an average speed (V2, V3) of the belt (2) and the belt pulley (3) from the running times (TR, TS), **characterized by** the following method steps:

a) generating a signal (SM8) from the first marking part (8) of the belt (2) at the first external reader (6.1),

b) generating a signal (SM9) from the second marking part (9) of the belt (2) at the first external reader (6.1),

c) generating a signal (SM10) from the third marking part (10) of the belt (2) at the first external reader (6.1),

d) generating a signal (SM11) from the fourth marking part (11) of the belt (2) at the first external reader (6.1),

e) generating a signal (SM8) from the first marking part (8) of the belt (2) at the second external reader (6.2),

f) generating a signal (SM9) from the second marking part (9) of the belt (2) at the second external reader (6.2),

g) generating a signal (SM10) from the third marking part (10) of the belt (2) at the second external reader (6.2),

h) generating a signal (SM11) from the fourth marking part (11) of the belt (2) at the second external reader (6.2),

i) ascertaining a running time from in each case two signals (SM8, SM9, SM10, SM11) using the evaluation and control unit (7),

j) ascertaining the average speed (V2) of the belt (2) using the evaluation and control unit (7) based on the ascertained running time of one of the marking parts (8, 9 or 10, 11) of the marking part pairs over the circumferential length over one revolution of the belt (2),

k) ascertaining the difference between the running times (dTR) of the two consecutive marking parts (8, 9 or 10, 11) of the marking part pairs of the belt (2) on the external reader (6.1) assigned to the load strand (TR1) using the evaluation and control unit (7),

l) ascertaining the measurement spacing (M1, M2) of the two consecutive marking parts (8, 9 or 10, 11) of the marking part pairs in the load strand (TR1) via the ascertained average speed (V2) of the belt (2) and the ascertained difference between the running times (dTR) of the two consecutive marking parts (8, 9 and 10, 11) of the marking part pairs of the belt (2),

m) ascertaining the difference between the running times (dTR) of the two consecutive marking parts (8, 9 or 10, 11) of the marking part pairs of the belt (2) at the external reader (6.2) assigned to the idle strand (TR2) using the evaluation and control unit (7),

n) ascertaining the measurement spacing (M1, M2) of the two consecutive marking parts (8, 9 or 10, 11) of the marking part pairs in the idle strand (TR2) via the ascertained average speed (V2) of the belt (2) and the ascertained difference between the running times (dTR) of the two consecutive marking parts (8, 9 and 10, 11) of the marking part pairs of the belt (2),

o) ascertaining the difference in spacing (dM) of the two consecutive marking parts (8, 9 and 10, 11) of the marking part pairs of the belt (2) from each other in the load strand (TR1) and in the idle strand (TR2) using the evaluation and control unit (7),

p) ascertaining the reference spacing (R) of the two consecutive marking parts (8, 9 or 10, 11) of the marking part pairs of the belt (2) using the evaluation and control unit (7) via the ascertained measurement spacings (M1, M2) of the two consecutive marking parts (8, 9 or 10, 11) of the marking part pairs of the belt (2) in the load strand (TR1) and in the idle strand (TR2) by averaging the measurement spacings (M1, M2),

q) ascertaining the longitudinal extension ($\varepsilon$) in the load strand (TR1) of the belt (2) using the evaluation and control unit (7) via the ascertained measurement spacing (M1, M2) of the two consecutive marking parts (8, 9 or 10, 11) of the marking part pairs of the belt (2) in the load strand (TR1) and the ascertained reference spacing (R),

r) ascertaining the tensile force (Fz) and difference in tensile force (dFz) in the load strand (TR1) of the belt (2) using the evaluation and control unit (7) via a spring stiffness (D) assigned to the belt (2) and stored in the evaluation and control unit (7) and the difference in spacing (dM) of the two consecutive marking parts (8, 9 or 10, 11) of the marking part pairs of the belt (2) in the load strand (TR1),

s) generating a signal (SM12) from the marking part (12) of the belt pulley (3) at one of the external readers (6.1, 6.2),

t) ascertaining a running time (TS) of the marking part (12) of the belt pulley (3) from two signals (SM12) using the evaluation and control unit (7),

u) ascertaining the speed (V3) of the belt pulley (3) using the evaluation and control unit (7) based on the ascertained running time (TS) of the marking part (12) of the belt pulley (3) over the defined circumference of the belt pulley (3),

v) ascertaining the slip (V4) between the belt (2) and the belt pulley (3) using the evaluation and control unit (7), based on the ascertained speeds (V2, V3) of the belt (2) and the belt pulley (3).

11. Method according to Claim 10,
**characterized in that**
when predetermined limit values for slip (V4) between the belt (2) and the belt pulley (3) stored in the evaluation and control unit (7) are exceeded, the evaluation and control unit (7) reduces the drive torque or the drive speed, so that the slip (V4) moves within defined limit values.

12. Method according to Claim 10 or 11,

**characterized in that** the evaluation and control unit (7) stores and backs up historical force profile data relating to the belt (2) and further historical sensor data from measuring devices of further machine elements in a memory and monitors the historical force profile data relating to the belt (2) within prespecified limit values stored in the memory of the evaluation and control unit (7),

wherein, taking into account otherwise ascertained historical sensor data relating to further machine elements from the memory of the evaluation and control unit (7), a conclusion is drawn about the wear of machine elements outside the device (1).

13. Use of the method according to one of Claims 10 to 12 for monitoring belt-driven devices on attachments of an agricultural machine.

**Revendications**

1. Dispositif (1) permettant de déterminer un allongement longitudinal ($\varepsilon$) et une vitesse moyenne (V2) d'une courroie (2), ainsi que de déterminer une vitesse (V3) d'au moins une poulie (3), comprenant

- la courroie (2) d'une rigidité longitudinale prédéterminée,
- dans lequel la longueur de la courroie (2) est réalisée de manière constante indépendamment de l'état de fonctionnement,
- dans lequel la courroie (2) présente au moins un premier repère (8), un deuxième repère (9), un troisième repère (10) et un quatrième repère (11),
- dans lequel le premier et le deuxième repère (8, 9) constituent une première paire de repères, et le troisième et le quatrième repère (10, 11) constituent une deuxième paire de repères,

- un dispositif d'entraînement (4) pourvu d'au moins deux poulies (3) d'un diamètre prédéterminé, disposées à un entraxe (A) l'une par rapport à l'autre et entourées au moins partiellement de la courroie (2),

- un dispositif de transmission (5), comprenant au moins deux lecteurs externes (6.1, 6.2) et une unité d'évaluation et de régulation (7) qui est adaptée pour réguler la vitesse de rotation et/ou le couple du dispositif d'entraînement (4),

- dans lequel pendant le tour de la courroie, chaque repère (8, 9 ou 10, 11) permet de générer des signaux identifiables (SM8, SM9, SM10, SM11) au niveau des lecteurs externes (6.1, 6.2), et

- de les délivrer à l'unité d'évaluation et de régulation (7),

- dans lequel la courroie (2) est réalisée de manière annulaire dans une direction circonférentielle (U) et est entraînée dans la direction circonférentielle (U) par le dispositif d'entraînement,

- dans lequel la courroie (2) présente un brin tendu (TR1) de transmission de charge et un brin mou (TR2) disposé à l'opposé du brin tendu,

- dans lequel les repères (8, 9 ou 10, 11) des paires de repères de la courroie (2) sont disposés les uns après les autres dans un état sans transmission de puissance respectivement à une distance de référence prédéterminée (R) dans la direction circonférentielle (U),

- dans lequel, en cas de transmission de puissance de la courroie (2), la distance de référence (R) des repères (8, 9) de la première paire de repères est réalisée pour passer à une première distance de mesure (M1),

- dans lequel, en cas de transmission de puissance de la courroie (2), la distance de référence (R) des repères (10, 11) de la deuxième paire de repères est réalisée pour passer à une deuxième distance de mesure (M2),

- dans lequel au moins l'une des poulies (3) présente au moins un repère (12),

- dans lequel pendant le tour de la poulie (3), le repère (12) de la poulie (3) est réalisé pour générer un signal identifiable (SM12) au niveau d'un des lecteurs externes (6.1, 6.2) et pour le délivrer à l'unité d'évaluation et de régulation (7),

- dans lequel le dispositif de transmission (5) est disposé sans contact avec la courroie (2) de telle sorte que les repères (8, 9, 10, 11, 12) des paires de repères de la courroie (2) et de la poulie (3) peuvent passer les uns après les autres devant le dispositif de transmission (5),

- dans lequel l'unité d'évaluation et de régulation (7) est configurée pour déterminer respectivement un temps de propagation respectivement à partir de deux signaux (SM8, SM9, SM10, SM11, SM12),

- dans lequel l'unité d'évaluation et de régulation (7) est configurée pour déterminer une vitesse moyenne (V2) de la courroie (2) sur la base du temps de propagation (TR) déterminé d'un des repères (8, 9 et 10, 11) des paires de repères par l'intermédiaire de la longueur circonférentielle (LR) pendant un tour de la courroie (2) et une vitesse (V3) de la poulie (3) sur la base du temps de propagation (TS) déterminé du repère (12) de la poulie (3),

**caractérisé en ce que**
dans un état de la courroie (2) sans transmission de puissance, au moins une paire de repères formée des repères (8, 9 ou 10, 11) est disposée respectivement dans le brin tendu et le brin mou (TR1, TR2) sur la circonférence (U) de la courroie (2), l'unité d'évaluation et de régulation (7) étant configurée pour

- déterminer un allongement longitudinal de la courroie sur la base de la vitesse de courroie moyenne (V2), de la différence des temps de propagation (dTR) des deux repères successifs (8, 9 ou 10, 11) des paires de repères de la courroie (2), aussi bien dans le brin tendu (TR1) que dans le brin mou (TR2), ainsi que sur la base de la distance de mesure (M1, M2) déterminée à partir de ceux-ci des repères (8, 9 ou 10, 11) des paires de repères aussi bien dans le brin tendu (TR1) que dans le brin mou (TR2) l'un par rapport à l'autre, ainsi que sur la base de la distance de référence (R) comme une moyenne des distances de mesure (M1, M2) déterminées,

- déterminer une force de traction (Fz) et une différence de force de traction (dFz) dans le brin tendu (TR1) de la courroie (2) par l'unité d'évaluation et de régulation (7) par l'intermédiaire d'une rigidité de ressort (D) associée à la courroie (2) et consignée dans l'unité d'évaluation et de régulation (7) ainsi qu'une différence de distance (dM) des repères (8, 9 ou 10, 11) des paires de repères de la courroie (2) dans le brin tendu (TR1),

- étant également configurée pour déterminer un glissement (V4) entre la courroie (2) et la poulie (3) sur la base du rapport entre les vitesses moyennes (V2, V3) déterminées de la courroie (2) et de la poulie (3).

2. Dispositif (1) selon la revendication 1,
**caractérisé en ce que**
les repères (8, 9, 10, 11, 12) sont réalisés sous forme de capteurs d'ondes de surface acoustiques.

**3.** Dispositif (1) selon la revendication 1,
**caractérisé en ce que**
les repères (8, 9, 10, 11, 12) sont réalisés sous forme de transpondeurs RFID.

**4.** Dispositif selon la revendication 1,
**caractérisé en ce que**
les repères (8, 9, 10, 11, 12) sont réalisés sous forme de repères ferromagnétiques.

**5.** Dispositif (1) selon l'une quelconque des revendications précédentes,
**caractérisé en ce que**
la poulie entraînée présente au moins un repère (12).

**6.** Dispositif (1) selon l'une quelconque des revendications précédentes,
**caractérisé en ce que**
respectivement l'un des lecteurs externes (6.1, 6.2) est disposé au niveau de l'entrée et de la sortie de la courroie (2) dans/hors de la poulie (3).

**7.** Dispositif (1) selon l'une quelconque des revendications précédentes,
**caractérisé en ce que**
lorsque des valeurs limites d'un glissement (V4) entre la courroie (2) et la poulie (3), prédéterminées et consignées dans l'unité d'évaluation et de régulation (7) sont dépassées, l'unité d'évaluation et de régulation (7) est configurée pour réguler le couple d'entraînement ou la vitesse de rotation d'entraînement de telle sorte que le glissement (V4) varie à l'intérieur de valeurs limites définies.

**8.** Dispositif (1) selon l'une quelconque des revendications précédentes,
**caractérisé en ce que**
l'unité d'évaluation et de régulation (7) est couplée à d'autres dispositifs de mesure d'éléments de machine et comprend une mémoire

- pour sauvegarder des données de capteur historiques, et
- pour sauvegarder des données de courbe de force historiques de la courroie (2), l'unité d'évaluation et de régulation (7) étant réalisée
- pour surveiller les données de courbe de force historiques de la courroie (2) à l'intérieur de valeurs limites prédéfinies et consignées dans la mémoire de l'unité d'évaluation et de régulation (7),
- et pour tirer des conclusions quant à l'usure des éléments de machine à l'extérieur du dispositif (1) en incluant les données de capteur historiques d'autres éléments de machine provenant de la mémoire de l'unité d'évaluation et de régulation (7).

**9.** Engin frontal d'une machine agricole, comprenant au moins un dispositif (1) selon l'une quelconque des revendications précédentes pour surveiller des dispositifs entraînés par courroie (2).

**10.** Procédé permettant de déterminer un allongement longitudinal ($\varepsilon$) et une vitesse moyenne (V2) d'une courroie (2), ainsi que de déterminer la vitesse (V3) d'au moins une poulie (3), comprenant

- la courroie (2) d'une rigidité longitudinale prédéterminée,
- dans lequel la longueur (LR) de la courroie (2) est réalisée de manière constante indépendamment de l'état de fonctionnement,
- dans lequel la courroie (2) présente au moins un premier repère (8), un deuxième repère (9), un troisième repère (10) et un quatrième repère (11),
- dans lequel le premier et le deuxième repère (8, 9) constituent une première paire de repères, et le troisième et le quatrième repère (10, 11) constituent une deuxième paire de repères,
- un dispositif d'entraînement (4) pourvu d'au moins deux poulies (3) d'un diamètre prédéterminé, disposées à un entraxe (A) l'une par rapport à l'autre et entourées au moins partiellement de la courroie (2),
- un dispositif de transmission (5), comprenant au moins deux lecteurs externes (6.1, 6.2) et une unité d'évaluation et de régulation (7) qui régule la vitesse de rotation et/ou le couple du dispositif d'entraînement (4),
- dans lequel pendant le tour de la courroie, chaque repère (8, 9 ou 10, 11) génère des signaux identifiables (SM8, SM9, SM10, SM11) au niveau des lecteurs externes (6.1, 6.2), et
- les délivre à l'unité d'évaluation et de régulation (7), dans lequel la courroie (2) tourne de manière annulaire dans une direction circonférentielle (U) et est entraînée par le dispositif d'entraînement (4) dans la direction circonférentielle (U), la courroie (2) présentant un brin tendu (TR1),

et un brin mou (TR2) disposé à l'opposé du brin tendu,

- dans lequel, dans un état sans transmission de puissance, les repères (8, 9 et 10, 11) des paires de repères de la courroie (2) sont disposés respectivement les uns après les autres à une distance de référence (R) prédéterminée dans la direction circonférentielle (U), dans un état sans charge de la courroie,

- dans lequel, en cas de transmission de puissance de la courroie (2), la distance de référence (R) des repères (8, 9) de la première paire de repères devient une première distance de mesure (M1),

- dans lequel, lors d'une transmission de puissance de la courroie (2), la distance de référence (R) des repères (10, 11) de la deuxième paire de repères devient une deuxième distance de mesure (M2), au moins l'une des poulies (3) présentant un repère (12), - dans lequel, pendant le tour de la poulie (3), le repère (12) de la poulie génère un signal identifiable au niveau d'un des lecteurs externes (6.1, 6.2) et le délivre à l'unité d'évaluation et de régulation (7),

- dans lequel le dispositif de transmission (5) est disposé sans contact avec la courroie (2) de telle sorte que les repères (8, 9, 10, 11, 12) des paires de repères de la courroie (2) et de la poulie (3) sont amenés à passer les uns après les autres devant le dispositif de transmission (5),

- dans lequel l'unité d'évaluation et de régulation (7) détermine un temps de propagation (TR, TS) à partir de respectivement deux signaux (SM8, SM9, SM10, SM11, SM12),

- dans lequel l'unité d'évaluation et de régulation (7) détermine une vitesse moyenne (V2, V3) de la courroie (2) et de la poulie (3) à partir des temps de propagation (TR, TS),

**caractérisé par** les étapes de procédé suivantes consistant à :

a) générer un signal (SM8) du premier repère (8) de la courroie (2) au niveau du premier lecteur externe (6.1),

b) générer un signal (SM9) du deuxième repère (9) de la courroie (2) au niveau du premier lecteur externe (6.1),

c) générer un signal (SM10) du troisième repère (10) de la courroie (2) au niveau du premier lecteur externe (6.1),

d) générer un signal (SM11) du quatrième repère (11) de la courroie (2) au niveau du premier lecteur externe (6.1),

e) générer un signal (SM8) du premier repère (8) de la courroie (2) au niveau du deuxième lecteur externe (6.2),

f) générer un signal (SM9) du deuxième repère (9) de la courroie (2) au niveau du deuxième lecteur externe (6.2),

g) générer un signal (SM10) du troisième repère (10) de la courroie (2) au niveau du deuxième lecteur externe (6.2),

h) générer un signal (SM11) du quatrième repère (11) de la courroie (2) au niveau du deuxième lecteur externe (6.2),

i) déterminer un temps de propagation à partir de respectivement deux signaux (SM8, SM9, SM10, SM11) par l'unité d'évaluation et de régulation (7),

j) déterminer la vitesse moyenne (V2) de la courroie (2) par l'unité d'évaluation et de régulation (7) sur la base du temps de propagation déterminé d'un des repères (8, 9 ou 10, 11) des paires de repères par l'intermédiaire de la longueur circonférentielle pendant un tour de la courroie (2),

k) déterminer la différence des temps de propagation (dTR) des deux repères consécutifs (8, 9 ou 10, 11) des paires de repères de la courroie (2) au niveau du lecteur externe (6.1) associé au brin tendu (TR1) par l'unité d'évaluation et de régulation (7),

l) déterminer la distance de mesure (M1, M2) des deux repères (8, 9 ou 10, 11) consécutifs des paires de repères dans le brin tendu (TR1) par l'intermédiaire de la vitesse moyenne (V2) déterminée de la courroie (2) et de la différence déterminée des temps de propagation (dTR) des deux repères consécutifs (8, 9 et 10, 11) des paires de repères de la courroie (2),

m) déterminer la différence des temps de propagation (dTR) des deux repères consécutifs (8, 9 ou 10, 11) des paires de repères de la courroie (2) au niveau du lecteur externe (6.2) associé au brin mou (TR2) par l'unité d'évaluation et de régulation (7),

n) déterminer la distance de mesure (M1, M2) des deux repères (8, 9 ou 10, 11) consécutifs des paires de repères dans le brin mou (TR2) par l'intermédiaire de la vitesse moyenne (V2) déterminée de la courroie (2) et de la différence déterminée des temps de propagation (dTR) des deux repères consécutifs (8, 9 et 10, 11) des paires de repères de la courroie (2),

o) déterminer la différence de distance (dM) des deux repères consécutifs (8, 9 et 10, 11) des paires de repères de la courroie (2) dans le brin tendu (TR1) et dans le brin mou (TR2) l'un par rapport à l'autre par l'unité d'évaluation et de régulation (7),

p) déterminer la distance de référence (R) des deux repères consécutifs (8, 9 ou 10, 11) des paires de repères de la courroie (2) par l'unité d'évaluation et de régulation (7) par l'intermédiaire des distances de mesure (M1, M2) déterminées des deux repères consécutifs (8, 9 ou 10, 11) des paires de repères de la courroie (2) dans le brin tendu (TR1) et le brin mou (TR2) par un calcul de moyenne des distances de mesure (M1, M2),

q) déterminer l'allongement longitudinal ($\varepsilon$) dans le brin tendu (TR1) de la courroie (2) par l'unité d'évaluation et de régulation (7) par l'intermédiaire de la distance de mesure (M1, M2) déterminée des deux repères consécutifs (8, 9 ou 10, 11) des paires de repères de la courroie (2) dans le brin tendu (TR1) et la distance de référence (R) déterminée,

r) déterminer la force de traction (Fz) et une différence de force de traction (dFz) dans le brin tendu (TR1) de la courroie (2) par l'unité d'évaluation et de régulation (7) par l'intermédiaire d'une rigidité de ressort (D) associée à la courroie (2) et consignée dans l'unité d'évaluation et de régulation (7), ainsi que la différence de distance (dM) des deux repères consécutifs (8, 9 ou 10, 11) des paires de repères de la courroie (2) dans le brin tendu (TR1),

s) générer un signal (SM12) du repère (12) de la poulie (3) au niveau d'un des lecteurs externes (6.1, 6.2),

t) déterminer un temps de propagation (TS) du repère (12) de la poulie (3) à partir de deux signaux (SM12) par l'unité d'évaluation et de régulation (7),

u) déterminer la vitesse (V3) de la poulie (3) par l'unité d'évaluation et de régulation (7) sur la base du temps de propagation (TS) déterminé du repère (12) de la poulie (3) par l'intermédiaire de la circonférence définie de la poulie (3),

v) déterminer le glissement (V4) entre la courroie (2) et la poulie (3) par l'unité d'évaluation et de régulation (7), sur la base des vitesses (V2, V3) déterminées de la courroie (2) et de la poulie (3).

**11.** Procédé selon la revendication 10, **caractérisé en ce que** lorsque des valeurs limites d'un glissement (V4) entre la courroie (2) et la poulie (3), prédéterminées et consignées dans l'unité d'évaluation et de régulation (7) sont dépassées, l'unité d'évaluation et de régulation (7) réduit le couple d'entraînement ou la vitesse de rotation d'entraînement de telle sorte que le glissement (V4) varie à l'intérieur de valeurs limites définies.

**12.** Procédé selon la revendication 10 ou 11,

**caractérisé en ce que** l'unité d'évaluation et de régulation (7) consigne et sauvegarde dans une mémoire des données de courbe de force historiques de la courroie (2) et d'autres données de capteur historiques provenant de dispositifs de mesure d'autres éléments de machine et surveille les données de courbe de force historiques de la courroie (2) à l'intérieur de valeurs limites prédéfinies et consignées dans la mémoire de l'unité d'évaluation et de régulation (7), dans lequel on tire des conclusions quant à l'usure des éléments de machine à l'extérieur du dispositif (1) en incluant des données de capteur historiques d'autres éléments de machine, déterminées par ailleurs, provenant de la mémoire de l'unité d'évaluation et de régulation (7).

**13.** Utilisation du procédé selon l'une quelconque des revendications 10 à 12 pour surveiller des dispositifs entraînés par courroie au niveau d'engins frontaux d'une machine agricole.

FIG 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018215478 A1
- DE 202016008121 U1
- DE 102019206169 A1
- WO 02079747 A2